# EUROPEAN PATENT SPECIFICATION

(11) **EP 3 285 942 B1**
(45) Date of publication and mention of the grant of the patent: **27.02.2019**
(21) Application number: 16718344.1
(22) Date of filing: 22.04.2016
(51) Int. Cl.: B22F 1/00, C09D 11/00, B22F 9/24

(54) **PROCESS FOR THE PREPARATION OF METALLIC NANO-PARTICLE LAYERS AND THEIR USE FOR DECORATIVE OR SECURITY ELEMENTS**
VERFAHREN ZUR HERSTELLUNG VON METALLISCHEN NANOPARTIKELSCHICHTEN UND DEREN VERWENDUNG FÜR DEKORATIONS- ODER SICHERHEITSELEMENTE
PROCÉDÉ POUR LA PRÉPARATION DE COUCHES DE NANOPARTICULES MÉTALLIQUES ET LEUR UTILISATION POUR DES ÉLÉMENTS DE DÉCORATION OU DE SÉCURITÉ

(30) Priority: 24.04.2015 EP 15165005
(43) Date of publication of application: 28.02.2018
(73) Proprietor: BASF SE, 67056 Ludwigshafen (DE)
(72) Inventor: GRIGORENKO, Nikolay A, 4313 Moehlin (CH); RICHERT, Michelle, 68110 Illzach (FR)
(74) Representative: BASF IP Association
(86) International application number: PCT/EP2016/059087
(87) International publication number: WO 2016/170160

(56) References cited:
- WO-A1-2013/090983
- US-A1- 2007 281 136
- US-A1- 2007 281 140
- US-A1- 2012 301 639

## Description

The present invention relates to a process for the preparation of thin silver nanoparticles containing layers, which are produced directly on a substrate as part of a coating or printing process. The layers show different colours in transmittance and reflectance. The layers do not show the typical conductivity of metallic layers, since the particles are essentially discrete particles which are not sintered. The invention further relates to decorative and security elements. When the layers are applied over a security element, such as a hologram, the obtained products show also different colours in reflection and transmission, an extremely bright optically variable image (OVD image) and high purity and contrast. Depending on the thickness of the layer a more or less intensive metallic aspect appears.

DE 10 2010 004 181 describes the preparation of silver or gold carboxylate complexes with an alkin ligand. These complexes serve as metal precursors in chemical vapour deposition processes (CVD).

WO 2011/126706 discloses conductive films prepared from a silver complex formed by reaction of silver formiate or oxalate with an amine. These complexes may be part of a conductive ink which can be used in a printing process. The printed film is sintered and the layer exhibits a typical metallic conductivity.

US 2006/0130700 describes a first ink jet ink containing a silver salt and an amine and a second ink jet ink containing a reducing agent. Both ink jet inks, when applied to a substrate subsequently or concurrently lead to a metallic pattern on the substrate.

WO 2013/096664 discloses an ink composition and a method of making a conductive silver structure. The ink composition comprises a silver salt and a complex of a complexing agent and a salt of a short chain carboxylic acid. The complexing agent is, for example an alkyl amine or ammonia.

So far all prior art documents describe electrically conductive coatings or patterns.

The present invention provides a method for forming an electrically non-conductive silver layer on a substrate in a coating or printing process comprising the steps
A) coating or printing an ink composition on a substrate comprising
   a) a silver compound or a mixture of silver compounds,
   b) a compound selected from the group consisting of a compound of formula (I) 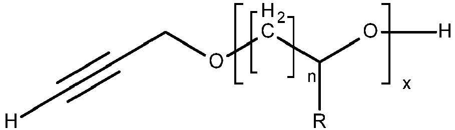 wherein n=1, 2 or 3, preferably 1 or 3,
      if n=3, R=H
      if n=1 or 2, R is substituted or unsubstituted C₁-C₁₈alkyl, or C₆-C₁₀aryl;
      and x=1 to 20, preferably 1 to 5;
      a compound of formula (II) 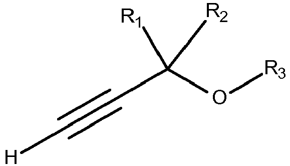
      wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
      R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
      a compound of formula (IIa) 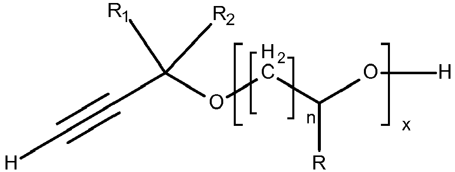 wherein R₁ and R₂ do not simultaneously stand for hydrogen, and n stands for 1,
      in formula (II) and (IIa) R₁ and R₂ may be connected in a form of a saturated or unsaturated ring, optionally containing heteroatoms;
      a compound of formula (III) 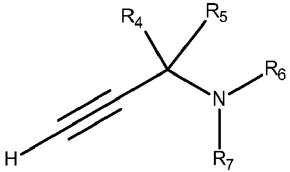
      wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
      R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain (e.g. PEG, PPG, number of monomer units 1-20),
      R₄ and R₅ may be connected in a form of a saturated or unsaturated ring, optionally containing heteroatoms;
      a compound of formula (IV) 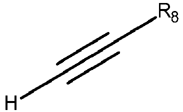 R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
   c) optionally a solvent and/or an organic binder and/or reducing agent and/or formulation stabilizer and
B) heating the coated or printed substrate to a temperature of from 30° C to 200° C or applying electromagnetic radiation, preferably ultraviolet (UV) light, or an electron beam.

In a preferred embodiment the non-conductive silver layer comprises silver nanoparticles.

The term coating or printing ink composition stands for coating composition or printing ink composition, meaning that the composition of the present invention can be used in coating processes as well as in printing processes.

C₁-C₁₈alkyl means methyl, ethyl, n-, i-propyl, n-butyl, i-butyl, sec.-butyl, tert.-butyl, n-pentyl, neopentyl, n-hexyl, n-heptyl, n-octyl, 2-ethyl-hexyl, i-octyl, n-nonyl, n-decyl, i-decyl, n-undecyl, n-dodecyl, n-tridecyl, n-tetradecyl, n-pentydecyl, n-hexadecyl, n-heptadecyl, n-, i-octadecyl, preferably C₁-C₁₂alkyl such as methyl, ethyl, n-, i-propyl, n-butyl, i-butyl, sec.-butyl, tert.-butyl, n-pentyl, neopentyl, n-hexyl, n-heptyl, n-octyl, 2-ethyl-hexyl, i-octyl, n-nonyl, n-decyl, i-decyl, n-undecyl, n-dodecyl, i-dodecyl, more preferably C₁-C₆alkyl such as methyl, ethyl, n-, i-propyl, n-butyl, i-butyl, sec.-butyl, tert.-butyl, n-pentyl, neopentyl, n-hexyl. C₅-C₁₀ cycloalkyl means cyclopentyl, cyclohexyl, cycloheptyl, cyclooctyl, cyclononyl, cyclodecyl, preferably C₅-C₆ cycloalkyl such as cyclopentyl, cyclohexyl, most preferred cyclohexyl.

Substituted C₁-C₁₈alkyl is, for example C₁-C₁₈ alkyl (as defined above), which is substituted, with -COOR' wherein R' is H, an alkali metal ion such as Li⁺, Na⁺ or K⁺, C₁-C₆alkyl (as defined above); -CONR'R", wherein R' and R" are C₁-C₁₈alkyl.

C₆-C₁₀aryl is phenyl or naphthyl, preferably phenyl, substituted C₆-C₁₀aryl is phenyl or naphthyl, preferably phenyl which can be substituted with halogen, such as F, Cl, Br, OC₁-C₁₈alkyl, NR'R" wherein R' and R" are defined as above.

Preferably R is hydrogen, phenyl, methyl or ethyl.

The compounds of formula (I), (II), (III) and (IV) are either commercially available or can be produced according to known methods by the skilled in the art. E.g. compounds of formula (I) can be prepared according to methods as decribed in EP 0 239 770 B1.

In general printing processes are preferred. Typical printing processes, which can be applied, are described below.

Preferably the heating temperature is from 40° C to 170° C, more preferably from 50° C to 150° C.

As a rule the heating step is carried out under atmospheric conditions and under normal pressure, for 0.1 seconds to 1000 seconds, preferably from 0.1 seconds to 500 seconds.

Preferably the electromagnetic radiation is ultraviolet (UV) light (also called "UV curing", meaning the formation of silver particles) or an electron beam, but curing (i.e. forming of silver particles) can also be carried out by using visible light or near-infrared radiation as well as heating.

In case of UV curing, the usual UV light sources known in the art can be applied such as e.g. mercury lamps (optionally doped; exhibiting an intensity in the range of e.g. 100 to 400 W/cm², preferred 150 to 250 W/cm²), UV LEDs, lasers, high-intensity lamps (e.g. Pulse-Forge® tool from Novacentrix). Preferably, the wavelength of the UV light sources are chosen in the range of from 200 to 400 nm.

The chosen exposure time depends on the used intensity, light source, layer thickness and curable composition, but usually is within the range of from 1 microsecond to 60 seconds, preferably from 10 microseconds to 20 seconds.

If desired, prior to UV curing a solvent evaporation step can be optionally integrated, succeeding through thermal drying at a temperature in the range of from 20°C to 120°C.

The final silver containing layer formed after step B) exhibits typically a thickness from 1 nm to 1000 nm, preferably from 5 nm to 500 nm.

Usually, this silver layer consists of a lower part and an upper part. As a rule, the lower part (i.e. the part having direct contact to the substrate) comprises silver particles with a particle size distribution in the range of from 0.5 to 50 nm, while the upper part (i.e. the part built on the lower part) comprises silver particles with a particle size distribution in the range of from 0.5 to 500 nm, preferably from 0.5 to 300 nm.

Preferably, the lower layer exhibits a thickness in the range of from 1 nm to 200 nm, and the upper part exhibits a thickness in the range of from 1 to 400 nm.

Usually, these layers are formed when the molar ratio of compounds of formula (I), (II), (III) or (IV) (or mixtures thereof) to the silver compound (or mixtures thereof) is chosen in the range of from 0.1 to 100, preferably of 0.5 to 10.

The coating or printing ink composition normally comprise a total content of silver compound and the compound of formula (I), (II), (III), (IV) of from 0.1 to 100 % by weight, preferably 0.1 to 70% by weight based on the total weight of the coating or printing ink composition.

Preferred silver compounds are silver salts or oxide. Suitable compounds are, for example, silver acetate, silver propionate, silver butyrate, silver carbonate, silver oxide, silver acetylacetonate, silver trifluoroacetate, silver halides, such as silver chloride, or silver cyanate, most preferred silver acetate.

In the context of the instant invention the term "non-conductive" means a resistance which is substantially higher than that of a metallic layer.

Typically the resistance of the layer after heating (step B) is higher than 1*10⁶ Ω/sq at a layer thickness of up to 100 nm, as measured by the four-point probe method. The four-point probe method is widely known and for example described in more detail in Smits, F.M., "Measurements of Sheet Resistivity with the Four-Point Probe", BSTJ, 37, p. 371 (1958).

Preferably the sheet resistance of the layer after step B) is higher than 5*10⁶ Ω/sq as measured by four-point probe method.

The silver layer obtained by the above process is not a continuous metallic silver layer, but comprises preferably discrete separated nano-particles. Typically the longest dimension of particles is from 0.5 nm to 500 nm, preferably from 0.5 nm to 300 nm, in particular from 1 to 200 nm. Due to the separation of the particles the resulting layer or coating shows a certain color in transmission and a different colour in reflection.

As substrate the usual substrates can be used. Further details to substrates are described further below.

The substrates can be plain such as in a metallic (e.g. Al foil) or plastic foils (e.g. PET foil), but paper is regarded also as a plain substrate in this sense.

Non-plain substrates or structured substrates comprise a structure, which was intentionally created, such as a hologram, or any other structure, created, for example, by embossing.

It is widely known to use in banknotes security elements in the form of strips or threads.

The method of the instant invention could replace the security elements in the form of strips or threads used in banknotes, which are made from a transparent film provided with a continuous reflective metal layer, vacuum deposited aluminium on polyester film being the commonest example.

The colours in transmission and reflection are dependent on the light-absorption spectrum of the coating and the colour in reflection may be complementary to the colour in transmission in the physical sense.

The coating or printing ink composition of the present invention can be used in the manufacture of an optically variable image (OVI, which also includes optically variable devices, such as, for example, a hologram). Reference is made to WO2005/051675 and WO2008/061930.

The printing ink compositions comprise optionally a binder. Generally, the binder is a high-molecular-weight organic compound conventionally used in coating compositions. High molecular weight organic materials usually have molecular weights of about from 10³ to 10⁸ g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

With respect to the binder resin, a thermoplastic resin may be used, examples of which include, polyethylene based polymers [polyethylene (PE), ethylene-vinyl acetate copolymer (EVA), vinyl chloride-vinyl acetate copolymer, vinyl alcohol-vinyl acetate copolymer, polypropylene (PP), vinyl based polymers [poly(vinyl chloride) (PVC), poly(vinyl butyral) (PVB), poly(vinyl alcohol) (PVA), poly(vinylidene chloride) (PVdC), poly(vinyl acetate) (PVAc), poly(vinyl formal) (PVF)], polystyrene based polymers [polystyrene (PS), styreneacrylonitrile copolymer (AS), acrylonitrile-butadiene-styrene copolymer (ABS)], acrylic based polymers [poly(methyl methacrylate) (PMMA), MMA-styrene copolymer], polycarbonate (PC), celluloses [ethyl cellulose (EC),cellulose acetate (CA), propyl cellulose (CP), cellulose acetate butyrate (CAB), cellulose nitrate (CN), also known as nitrocellulose], fluorin based polymers [polychlorofluoroethylene (PCTFE), polytetrafluoroethylene (PTFE), tetrafluoroethylene-hexafluoroethylene copolymer (FEP), poly(vinylidene fluoride) (PVdF)], urethane based polymers (PU), nylons [type 6, type 66, type 610, type 11], polyesters (alkyl) [polyethylene terephthalate (PET), polybutylene terephthalate (PBT), polycyclohexane terephthalate (PCT)], novolac type phenolic resins, or the like. In addition, thermosetting resins such as resol type phenolic resin, a urea resin, a melamine resin, a polyurethane resin, an epoxy resin, an unsaturated polyester and the like, and natural resins such as protein, gum, shellac, copal, starch and rosin may also be used.

The binder preferably comprises nitrocellulose, ethyl cellulose, cellulose acetate, cellulose acetate propionate (CAP), cellulose acetate butyrate (CAB), hydroxyethyl cellulose (HEC), hydroxypropyl cellulose (HPC), alcohol soluble propionate (ASP), vinyl chloride, vinyl acetate copolymers, vinyl acetate, vinyl, acrylic, polyurethane, polyamide, rosin ester, hydrocarbon, aldehyde, ketone, urethane, polythyleneterephthalate, terpene phenol, polyolefin, silicone, cellulose, polyamide, polyester, rosin ester resins, shellac and mixtures thereof, most preferred are soluble cellulose derivatives such as hydroxylethyl cellulose, hydroxypropyl cellulose, nitrocellulose, carboxymethylcellulose as well as chitosan and agarose, in particular hydroxyethyl cellulose and hydroxypropyl cellulose.

Usually, the weight-ratio of binder to the total silver content (i.e. amount of silver equivalent to elementary silver) in the coating or printing coating or printing ink composition is chosen in the range of from 0.001 to 100, preferably from 0.001 to 10.

The coating or printing ink compositions may also comprise an additional colourant. Examples for suitable dyes and pigments are given subsequently.

To accomplish the alignment of the silver particles formed to the contours of a diffraction grating the ink (coating composition) preferably has a very low binder and a low silver content.

Advantageously, the coating or printing ink compositions of the present invention further comprise a solvent.

Preferably, the solvent is a polar solvent and can be protic or aprotic. Examples of solvents are esters, such as n-propyl acetate, iso-propyl acetate, ethyl acetate, butyl acetate; alcohols, such as ethyl alcohol, 1-methoxy-2-propanol, industrial methylated spirits, isopropyl alcohol or n-propyl alcohol; ketones, such as methyl ethyl ketone, 1-methoxy-2-propanol, or acetone; aromatic hydrocarbons, such as xylene and toluene, as well as ethoxypropanol, methoxypropylacetate, diacetonalcohol, and water, as well as mixtures thereof.

In general alcohols are preferred, in particular ethanol and 1-methoxy-2-propanol.

In a specific embodiment the only solvent is water.

The optional solvent may be present in the coating or printing ink composition in an amount of from 0 to 99.9% by weight of the coating or printing ink composition, preferably 10 to 99%.

The printing ink or coating composition may also contain a surfactant. In general surfactants change the surface tension of the composition. Typical surfactants are known to the skilled person, they are for example, anionic or non-ionic surfactants. Examples of anionic surfactants can be, for example, a sulfate, sulfonate or carboxylate surfactant or a mixture thereof. Preference is given to alkylbenzenesulfonates, alkyl sulfates, alkyl ether sulfates, olefin sulfonates, fatty acid salts, alkyl and alkenyl ether carboxylates or to an α-sulfonic fatty acid salt or an ester thereof.

Preferred sulfonates are, for example, alkylbenzenesulfonates having from 10 to 20 carbon atoms in the alkyl radical, alkyl sulfates having from 8 to 18 carbon atoms in the alkyl radical, alkyl ether sulfates having from 8 to 18 carbon atoms in the alkyl radical, and fatty acid salts derived from palm oil or tallow and having from 8 to 18 carbon atoms in the alkyl moiety. The average molar number of ethylene oxide units added to the alkyl ether sulfates is from 1 to 20, preferably from 1 to 10. The cation in the anionic surfactants is preferably an alkaline metal cation, especially sodium or potassium, more especially sodium. Preferred carboxylates are alkali metal sarcosinates of formula R₉-CON(R₁₀)CH₂COOM₁ wherein Rg is C₉-C₁₇alkyl or C₉-C₁₇alkenyl, R₁₀ is C₁-C₄alkyl and M₁ is an alkali metal such as lithium, sodium, potassium, especially sodium.

C₉-C₁₇alkyl means n-, i-nonyl, n-, i-decyl, n-, i-undecyl, n-, i-dodecyl, n-, i-tridecyl, n-, i-tetradecyl, n-, i-pentadecyl, n-, i-hexadecyl, n-, i-heptadecyl.

C₉-C₁₇alkenyl means n-, i-nonenyl, n-, i-decenyl, n-, i-undecenyl, n-, i-dodecenyl, n-, i-tridecenyl, n-, i-tetradecenyl, n-, i-pentadecenyl, n-, i-hexadecenyl, n-, i-heptadecenyl.

The non-ionic surfactants may be, for example, a primary or secondary alcohol ethoxylate, especially a C₈-C₂₀ aliphatic alcohol ethoxylated with an average of from 1 to 20 mol of ethylene oxide per alcohol group. Preference is given to primary and secondary C₁₀-C₁₅ aliphatic alcohols ethoxylated with an average of from 1 to 10 mol of ethylene oxide per alcohol group. Non-ethoxylated non-ionic surfactants, for example alkylpolyglycosides, glycerol monoethers and polyhydroxyamides (glucamide), may likewise be used. Further in addition, an auxiliary agent including a variety of reactive agents for improving drying property, viscosity, and dispersibility, may suitably be added. The auxiliary agents are to adjust the performance of the ink, and for example, a compound that improves the abrasion resistance of the ink surface and a drying agent that accelerates the drying of the ink and the like may be employed.

Furthermore, to the binder, a plasticizer for stabilizing the flexibility and strength of the print film and a solvent for adjusting the viscosity and drying property may be added according to the needs therefor.

The coating or printing ink composition may additionally contain a complexing agent for silver ions. Examples of complexing agents are ammonia, primary, secondary and tertiary amines, acetylenes, carboxylic acids, amino acids or thiols.

If desired, a commonly known reducing agent can be added to the coating or printing ink composition, which allows to optimize the required curing (= silver nanoparticles formation) temperature and/or to increase the curing speed at a given temperature. Examples for such reducing agents are polyphenols and their derivatives; formic acids and it's salts; oxalic acid and it's salts; aldehydes, such as butyraldehyde, glyoxal, glutaric dialdehyde, glyoxylic acid; acetals and hemi-acetals such as glyoxal trimer dihydrate (hexahydro[1,4]dioxino[2,3-b][1,4]dioxine-2,3,6,7-tetrol); ascorbic acid; hydroxylamine and it's derivatives; hydrazine and its derivatives; alkyl and aryl phosphines; tin hydrides or silanes. Most preferred reducing agents are polyphenols and their derivates such as 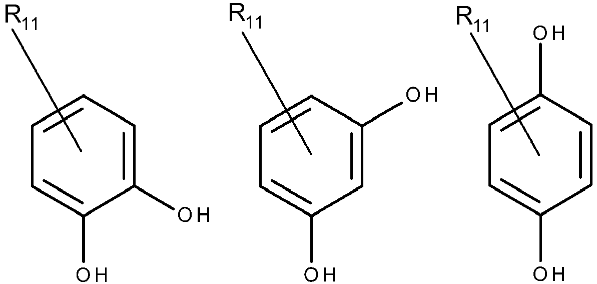 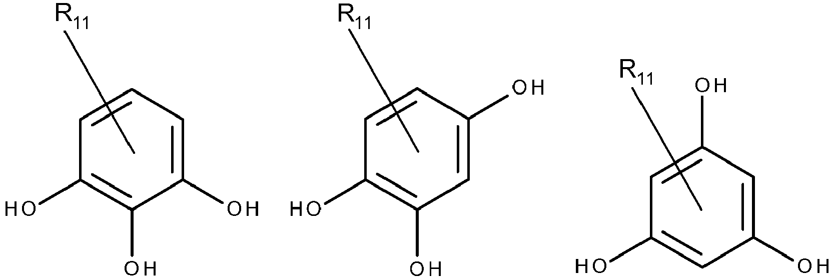
R₁₁ stands for example for H, C₁-C₁₈alkyl as defined above, phenyl, -CH₂OH, -CHO, -CH₂COOR₁₂, -COOR₁₂, -NHR₁₂, -NR₁₂R₁₃, -COR₁₂, preferably for H, C₁-C₁₈alkyl, -CH₂OH, -CHO, -CH₂COOR₁₂, -COOR₁₂, -COR₁₂.
R₁₂ and R₁₃ stand independently for H, C₁-C₁₈alkyl, or phenyl, preferably for H, C₁-C₁₈alkyl, as well as more complex compounds such as tannic acid.

Particularly preferred polyphenols are as resorcinol and its derivatives, hydroquinone and its derivatives, pyrocatechol and its derivatives, pyrogallol, C₁-C₁₈alkyl esters of gallic acid, 2,3,4-trihydroxyacetophenone, tannic acid.

Preferably the additional reducing agents are used in a weight ratio to total silver content in the coating or printing ink composition from 0.01 to 100, preferably from 0.05 to 10.

The coating or printing ink composition may further contain a dispersant. The dispersant may be any polymer which prevents agglomeration or aggregation of the spherical and shaped particles formed after heating step B). The dispersant may be a non-ionic, anionic or cationic polymer having a weight average molecular weight of from 500 to 2,000,000 g/mol, preferably from 1,500,000 to 1,000,000 g/mol, which forms a solution or emulsion in the aqueous mixture. Typically, the polymers may contain polar groups. Suitable polymeric dispersants often possess a two-component structure comprising a polymeric chain and an anchoring group. The particular combination of these leads to their effectiveness.

Suitable commercially available polymeric dispersants are, for example, EFKA® 4046, 4047, 4060, 4300, 4330, 4580, 4585, 8512, Disperbyk® 161, 162, 163, 164, 165, 166, 168, 169, 170, 2000, 2001, 2050, 2090, 2091, 2095, 2096, 2105, 2150, Ajinomoto Fine Techno's PB® 711, 821, 822, 823, 824, 827, Lubrizol's Solsperse® 24000, 31845, 32500, 32550, 32600, 33500, 34750, 36000, 36600, 37500, 39000, 41090, 44000, 53095, ALBRITECT® CP30 (a copolymer of acrylic acid and acrylphosphonate) and combinations thereof.

Preference is given to polymers derived from hydroxyalkyl(meth)acrylates and/or polyglycol (meth)acrylates, such as hydroxyethyl and hydroxypropyl (meth)acrylate, polyethylene glycol (meth)acrylates, (meth)acrylates having amine functionality, for example, N-[3-(dimethylamino)propyl](meth)acrylamide or 2-(N,N-dimethylamino)ethyl(meth)acrylate.

In particular, non-ionic copolymer dispersants having amine functionality are preferred. Such dispersants are commercially available, for example as EFKA® 4300, EFKA® 4580 or EFKA 4585.

The polymeric dispersants may be used alone or in admixture of two or more.

A photopolymerization-curable resin or an electron beam curable resin wherein a solvent is not used may also be employed as a binder resin. The examples thereof include an acrylic resin, and specific examples of acrylic monomers commercially available are shown below.

A monofunctional acrylate monomer that may be used includes for example, 2-ethylhexyl acrylate, 2-ethylhexyl-EO adduct acrylate, ethoxydiethylene glycol acrylate, 2-hydroxyethyl acrylate, 2-hydroxypropyl acrylate, 2-hydroxyethyl acrylate-caprolactone addduct, 2-phenoxyethyl acrylate, phenoxydiethylene glycol acrylate, nonyl phenol-EO adduct acrylate, (nonyl phenol-EO adduct)-caprolactone adduct acrylate, 2-hydroxy-3-phenoxypropyl acrylate, tetrahydrofurfuryl acrylate, furfuryl alcohol-caprolactone adduct acrylate, acryloyl morpholine, dicyclopentenyl acrylate, dicyclopentanyl acrylate, dicyclopentenyloxyethyl acrylate, isobornyl acrylate, (4,4-dimethyl-1,3-dioxane)-caprolactone adduct acrylate, (3-methyl-5,5-dimethyl-1,3-dioxane)-caprolactone adduct acrylate, and the like.

A polyfunctional acrylate monomer that may be used includes hexanediol diacrylate, neopentyl glycol diacrylate, polyethylene glycol diacrylate, tripropylene glycol diacrylate, neopentyl glycol hydroxypivalate diacrylate, (neopentyl glycol hydroxypivalate)-caprolactone adduct diacrylate, (1,6-hexanediol diglycidyl ether)-acrylic acid adduct, (hydroxypivalalde-hyde-trimethylolpropane acetal) diacrylate, 2,2-bis[4-(acryloyloxydiethoxy)phenyl]propane, 2,2-bis[4-(acryloyloxydiethoxy)phenyl]methane, hydrogenated bisphenol A-ethylene oxide adduct diacrylate, tricyclodecanedimethanol diacrylate, trimethylolpropane triacrylate, pentaerithritol triacrylate, (trimethylolpropane-propylene oxide) adduct triacrylate, glycerine-propylene oxide adduct triacrylate, a mixture of dipentaerithritol hexaacrylate and pentaacrylate, esters of dipentaerithritol and lower fatty acid and acrylic acid, dipentaerithritol-caprolactone adduct acrylate, tris(acryloyloxyethyl) isocyanurate, 2-acryloyloxyethyl phosphate, and the like.

With respect to inks of ultraviolet-irradiation type curing among these inks, a photopolymerization initiator, and depending on the needs therefor, a sensitizing agent, and auxiliary agents such as a polymerization inhibitor and a chain transfer agent, and the like may be added thereto.

With respect to photo-polymerization initiators, there are, (1) an initiator of direct photolysis type including an arylalkyl ketone, an oxime ketone, an acylphosphine oxide, or the like, (2) an initiator of radical polymerization reaction type including a benzophenone derivative, a thioxanthone derivative, or the like, (3) an initiator of cationic polymerization reaction type including an aryl diazonium salt, an aryl iodinium salt, an aryl sulfonium salt, and an aryl acetophenone salt, or the like, and in addition, (4) an initiator of energy transfer type, (5) an initiator of photoredox type, (6) an initiator of electron transfer type, and the like. With respect to the inks of electron beam-curable type, a photopolymerization initiator is not necessary and a resin of the same type as in the case of the ultraviolet-irradiation type inks can be used, and various kinds of auxiliary agent may be added thereto according to the needs therefor.

A further specific embodiment of the invention concerns a preferred method for forming an optically variable image on a substrate comprising the steps of:
A) forming an optically variable image (OVI) on a discrete portion of the substrate; comprising
   a1) applying a curable composition to at least a portion of the substrate;
   a2) contacting at least a portion of the curable composition with OVI forming means; and
   a3) curing the curable composition treated in step a2) by OVI forming means,
B) coating or printing an ink composition on at least a part of the cured OVI obtained in step a3) comprising
   a) a silver compound or a mixture of silver compounds,
   b) a compound selected from the groups consisting of a compound of formula (I) 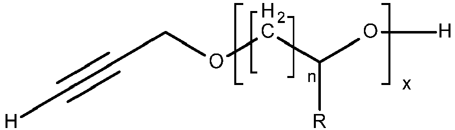
      wherein n=1, 2 or 3, preferably 1 or 3,
      if n=3, R=H
      if n=1 or 2, R is substituted or unsubstituted C₁-C₁₈alkyl, or C₆-C₁₀aryl; and x=1 to 20, preferably 1 to 5;
      a compound of formula (II) 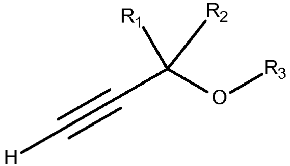
      wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
      R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
      a compound of formula (IIa) 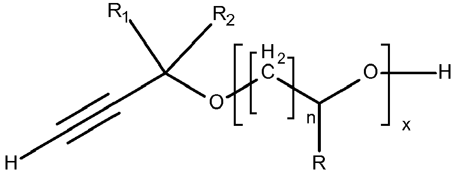
      wherein R₁ and R₂ do not simultaneously stand for hydrogen, and n stands for 1,
      in formula (II) and (IIa) R₁ and R₂ may be connected in a form of a saturated or unsaturated ring, optionally containing heteroatoms;
      a compound of formula (III) 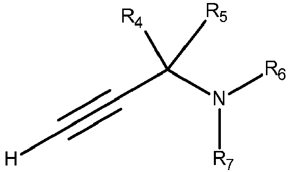
      wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
      R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain (e.g. PEG, PPG, number of monomer units 1-20),
      R₄ and R₅ may be connected in a form of a saturated or unsaturated ring, optionally containing heteroatoms;
      a compound of formula (IV) 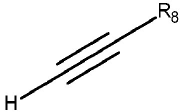
      R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
   c) optionally a solvent and/or an organic binder and/or reducing agent and/or formulation stabilizer; and
C) heating the coated or printed substrate to a temperature of from 30° C to 200° C or applying electromagnetic radiation, preferably ultraviolet (UV) light, or an electron beam.

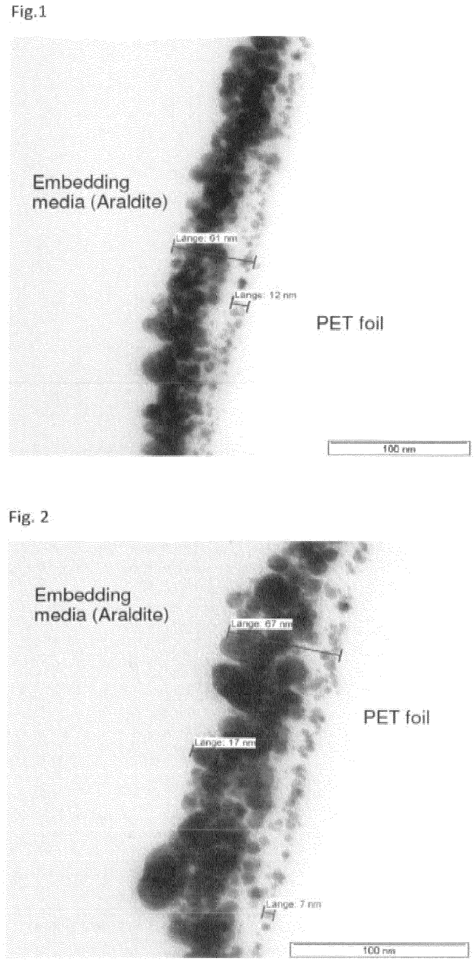

Further details of such a method are described in Fig. 1 of WO08/061930, where certain substrates like paper, aluminium, or other opaque substrates (1) are printed with an ultra violet curable lacquer (2) on its lower surface. An optically variable device, a lens or an engraved structure is cast (3) into the surface of the lacquer (2) with a clear shim (4) having the optically variable device or other lens or engraved structure thereon. The optically variable device, lens or engraved structure image is imparted into the lacquer and instantly cured (6) via an UV lamp disposed through the shim (4) at normal processing speeds through polarizing lens (8), quartz roller (6), and clear polycarbonate roller (5). The optically variable device, lens or engraved structure image is a facsimile of the image on the clear shim. Metallic ink (9) is printed (10) over the optically variable device or other lens or engraved structure and causes the optically variable device, lens or engraved structure to become light reflective. Further colours (11) can be subsequently conventionally printed in-line at normal printing process speeds. In an alternative embodiment, the paper, aluminium, and all manner of other opaque substrate (1) is replaced with a filmic substrate. Such material is substantially transparent and therefore the image is visible from both sides of the surface.

The printing ink composition may be applied to the substrate by means of conventional printing press such as gravure, flexographic, lithographic, offset, letterpress intaglio and/or screen process, or other printing process.

Other digital printing processes are also possible, such as electrophotographic or ink jet processes.

In another embodiment the printing coating or printing ink composition may be applied by coating techniques, such as spraying, dipping, casting or spin-coating.

Preferably the printing process is carried out by flexographic, offset or by gravure printing.

The resulting products may be coated with a protective coating. The protective coating is preferably transparent or translucent. Examples for such coatings are known to the skilled person. For example, water borne coatings, UV-cured coatings or laminated coatings may be used. Examples for typical coating resins will be given below.

In a specific embodiment in the method as described in claim 1, step A) and B) are repeated 1 to 5 times or in the method as described in claim 3 step B) and C) are repeated 1 to 5 times resulting in a multilayer metallic structure.

In some cases it might be suitable to apply a neutral or protective coating between the repeatedly applied metallic coatings. Suitable binders for such coatings are given below.

The (security) product obtainable by using the above method forms a further subject of the present invention.

Typically the security product includes banknotes, credit cards, identification documents like passports, identification cards, driver licenses, or other verification documents, pharmaceutical apparel, software, compact discs, tobacco packaging and other products or packaging prone to counterfeiting or forgery.

The substrate may comprise any sheet material. The substrate may be opaque, substantially transparent or translucent, wherein the method described in WO08/061930 is especially suited for substrates, which are opaque to UV light (non-transparent). The substrate may comprise paper, leather, fabric such as silk, cotton, tyvac, filmic material or metal, such as aluminium. The substrate may be in the form of one or more sheets or a web.

The substrate may be mould made, woven, non-woven, cast, calendared, blown, extruded and/or biaxially extruded. The substrate may comprise paper, fabric, man made fibres and polymeric compounds. The substrate may comprise any one or more selected from the group comprising paper, papers made from wood pulp or cotton or synthetic wood free fibres and board. The paper/board may be coated, calendared or machine glazed; coated, uncoated, mould made with cotton or denim content, Tyvac, linen, cotton, silk, leather, polythyleneterephthalate, polypropylene propafilm, polyvinylchloride, rigid PVC, cellulose, triacetate, acetate polystyrene, polyethylene, nylon, acrylic and polytherimide board. The polythyleneterephthalate substrate may be Melienex type film orientated polypropylene (obtainable from DuPont Films Willimington Delaware product ID Melinex HS-2).

The substrates being transparent films or non transparent substrates like opaque plastic, paper including but not limited to banknote, voucher, passport, and any other security or fiduciary documents, self adhesive stamp and excise seals, card, tobacco, pharmaceutical, computer software packaging and certificates of authentication, aluminium, and the like.

In a preferred embodiment of the present invention the substrate is a non-transparent (opaque) sheet material, such as, for example, paper.

In another preferred embodiment of the present invention the substrate is a transparent or translucent sheet material, such as, for example, polythyleneterephthalate.

The forming of an optically variable image on the substrate may comprise depositing a curable composition on at least a portion of the substrate, as described above. The curable composition, generally a coating or lacquer may be deposited by means of gravure, flexographic, ink jet and screen process printing. The curable lacquer may be cured by actinic radiations, preferably ultraviolet (UV) light or electron beam. Preferably, the curable lacquer is UV cured. UV curing lacquers are well known and can be obtained from e.g. BASF SE. The lacquers exposed to actinic radiations or electron beam used in the present invention are required to reach a solidified stage when they separate again from the imaging shim in order to keep the record in their upper layer of the sub-microscopic, holographic diffraction grating image or pattern (optically variable image, OVI). Particularly suitable for the lacquer compositions are mixtures of typical well-known components (such as photoinitiators, monomers, oligomers. levelling agents etc.) used in the radiation curable industrial coatings and graphic arts. Particularly suitable are compositions containing one or several photo-latent catalysts that will initiate polymerization of the exposed lacquer layer to actinic radiations. Particularly suitable for fast curing and conversion to a solid state are compositions comprising one or several monomers and oligomers sensitive to free-radical polymerization, such as acrylates, methacrylates or monomers or/and oligomers, containing at least one ethylenically unsaturated group, examples have already been given above. Further reference is made to pages 8 to 35 of WO2008/061930.

The UV lacquer may comprise an epoxy-acrylate from the CRAYNOR® Sartomer Europe range (10 to 60%) and one or several acrylates (monofunctional and multifunctional), monomers which are available from Sartomer Europe (20 to 90%) and one, or several photoinitiators (1 to 15%) such as Darocure® 1173 and a levelling agent such as BYK®361 (0.01 to 1%) from BYK Chemie.

The curable composition is preferably deposited by means of gravure or flexographic printing.

The curable composition can be coloured.

A filmic substrate is printed conventionally with a number of coloured inks, using, for example, a Cerutti R950 printer (available from Cerrutti UK Long Hanborough Oxon.). The substrate is then printed with an ultra violet curable lacquer. An OVI is cast into the surface of the curable composition with a shim having the OVI thereon, the holographic image is imparted into the lacquer and instantly cured via a UV lamp, becoming a facsimile of the OVI disposed on the shim.

The diffraction grating may be formed using any methods known to the skilled man such as those described in US4,913,858, US5,164,227, WO2005/051675 and WO2008/061930.

The curable coating composition may be applied to the substrate by means of conventional printing press such as gravure, rotogravure, flexographic, lithographic, offset, letterpress intaglio and/or screen process, or other printing process.

Preferably, when the substrate carrying the enhanced diffractive image or pattern is subsequently over-laid onto printed pictures and/or text, or the substrate is pre-printed with pictures and/or text and the enhanced diffractive image or pattern is deposited thereon, those printed features are visible through the substrate, provided that the substrate itself is at least opake, translucent or transparent. Preferably the silver layer which is printed over the optically variable image, for example the diffraction grating is also sufficiently thin as to allow viewing in transmission and reflectance. In other words the whole security element on the substrate allows a viewing in transmission and reflectance.

The curable composition may further comprise modifying additives, for example colorants and/or suitable solvent (s).

Preferably, the resin maintains adhesion of the composition to the surface of the diffraction grating.

Specific additives can be added to the composition to modify its chemicals and/or physical properties. Polychromatic effects can be achieved by the introduction of (colored) inorganic and/or organic pigments and/or solvent soluble dyestuffs into the ink, to achieve a range of coloured shades. By addition of a dye the transmission colour can be influenced. By the addition of fluorescent or phosphorescent materials the transmission and/or the reflection colour can be influenced.

Suitable colored pigments especially include organic pigments selected from the group consisting of azo, azomethine, methine, anthraquinone, phthalocyanine, perinone, perylene, diketopyrrolopyrrole, thioindigo, dioxazine iminoisoindoline, dioxazine, iminoisoindolinone, quinacridone, flavanthrone, indanthrone, anthrapyrimidine and quinophthalone pigments, or a mixture or solid solution thereof; especially a dioxazine, diketopyrrolopyrrole, quinacridone, phthalocyanine, indanthrone or iminoisoindolinone pigment, or a mixture or solid solution thereof.

Colored organic pigments of particular interest include C.I. Pigment Red 202, C.I. Pigment Red 122, C.I. Pigment Red 179, C.I. Pigment Red 170, C.I. Pigment Red 144, C.I. Pigment Red 177, C.I. Pigment Red 254, C.I. Pigment Red 255, C.I. Pigment Red 264, C.I. Pigment Brown 23, C.I. Pigment Yellow 109, C.I. Pigment Yellow 110, C.I. Pigment Yellow 147, C.I. Pigment Orange 61, C.I. Pigment Orange 71, C.I. Pigment Orange 73, C.I. Pigment Orange 48, C.I. Pigment Orange 49, C.I. Pigment Blue 15, C.I. Pigment Blue 60, C.I. Pigment Violet 23, C.I. Pigment Violet 37, C.I. Pigment Violet 19, C.I. Pigment Green 7, C.I. Pigment Green 36, the 2,9-dichloro-quinacridone in platelet form described in WO08/055807, or a mixture or solid solution thereof.

Plateletlike organic pigments, such as plateletlike quinacridones, phthalocyanine, fluo-rorubine, dioxazines, red perylenes or diketopyrrolopyrroles can advantageously be used.

Suitable colored pigments also include conventional inorganic pigments; especially those selected from the group consisting of metal oxides, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, Fe₃O₄, carbon black and mixed metal oxides.

Examples of dyes, which can be used to color the curable composition, are selected from the group consisting of azo, azomethine, methine, anthraquinone, phthalocyanine, dioxazine, flavanthrone, indanthrone, anthrapyrimidine and metal complex dyes. Monoazo dyes, cobalt complex dyes, chrome complex dyes, anthraquinone dyes and copper phthalocyanine dyes are preferred.

The optically variable device (OVD) is, for example, a diffractive optical variable image (DOVI). The term "diffractive optical variable image" as used herein may refer to any type of holograms including, for example, but not limited to a multiple plane hologram (e.g., 2-dimensional hologram, 3-dimensional hologram, etc.), a stereogram, and a grating image (e.g., dot-matrix, pixelgram, exelgram, kinegram, etc.).

Examples of an optically variable image or device are holograms or diffraction gratings, moire grating, etc. These optical microstructured images are composed of a series of structured surfaces. These surfaces may have straight or curved profiles, with constant or random spacing, and may even vary from microns to millimetres in dimension. Patterns may be circular, linear, or have no uniform pattern. For example a Fresnel lens has a microstructured surface on one side and a pano surface on the other. The microstructured surface consists of a series of grooves with changing slope angles as the distance from the optical axis increases. The draft facets located between the slope facets usually do not affect the optical performance of the Fresnel lens.

Accordingly a further aspect of the invention is a security, or decorative element, comprising a substrate, which may contain indicia or other visible features in or on its surface, and on at least part of the said substrate surface, an electrically non-conductive silver layer which has been prepared in a coating or printing process comprising the steps
A) coating or printing an ink composition on a substrate comprising
   a) a silver compound or a mixture of silver compounds,
   b) a compound selected from the groups consisting of a compound of formula (I) 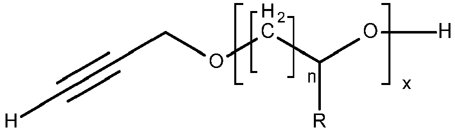 wherein n=1, 2 or 3, preferably 1 or 3,
      if n=3, R=H
      if n=1 or 2, R is substituted or unsubstituted C₁-C₁₈alkyl, or C₆-C₁₀aryl; and x=1 to 20, preferably 1 to 5;
      a compound of formula (II) 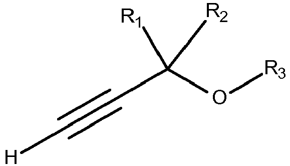
      wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
      R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
      a compound of formula (IIa) 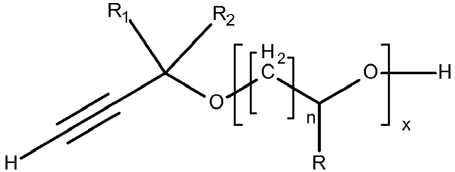
      wherein R₁ and R₂ do not simultaneously stand for hydrogen, and n stands for 1,
      in formula (II) and (IIa) R₁ and R₂ may be connected in a form of a saturated or unsaturated ring, optionally containing heteroatoms;
      a compound of formula (III) 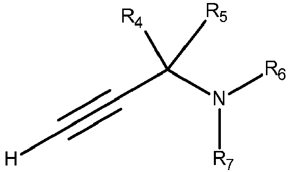
      wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
      R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain (e.g. PEG, PPG, number of monomer units 1-20),
      R₄ and R₅ may be connected in a form of a saturated or unsaturated ring, optionally containing heteroatoms;
      a compound of formula (IV) 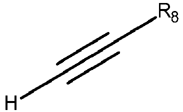 R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
   c) optionally a solvent and/or an organic binder and/or reducing agent and/or formultion stabilizer; and
B) heating the coated or printed substrate to a temperature of from 30° C to 200° C or applying electromagnetic radiation, preferably ultraviolet (UV) light, or an electron beam.

All definitions and abbreviations are already described above.

The security or decorative element according to the invention may additionally comprise a protective coating. Examples of suitable binders for coatings have already been given above.

Also an aspect of the invention is the use of the element as described above for the prevention of counterfeit or reproduction, on a document of value, right, identity, a security label or a branded good.

Yet a further aspect of the invention is a coating or printing ink composition comprising
a) a silver compound or a mixture of silver compounds,
b) a compound selected from the groups consisting of a compound of formula (I) 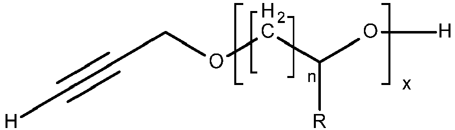 wherein n=1, 2 or 3, preferably 1 or 3,
   if n=3, R=H
   if n=1 or 2, R is substituted or unsubstituted C₁-C₁₈alkyl, or C₆-C₁₀aryl; and x=1 to 20, preferably 1 to 5;
   a compound of formula (II) 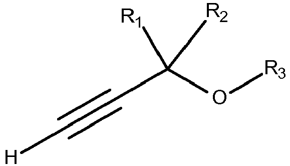
   wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
   R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
   a compound of formula (IIa) 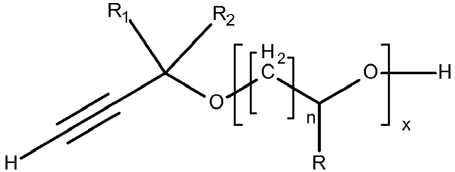
   wherein R₁ and R₂ do not simultaneously stand for hydrogen, and n stands for 1,
   in formula (II) and (IIa) R₁ and R₂ may be connected in a form of a saturated or unsaturated ring, optionally containing heteroatoms;
   a compound of formula (III) 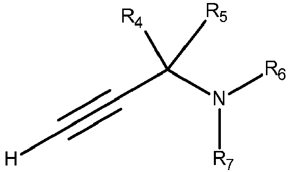
   wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
   R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain (e.g. PEG, PPG, number of monomer units 1-20),
   R₄ and R₅ may be connected in a form of a saturated or unsaturated ring, optionally containing heteroatoms;
   a compound of formula (IV) 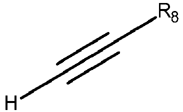 R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
c) optionally a solvent and/or an organic binder and/or reducing agent and/or formulation stabilizer.

All definitions and abbreviations are already described above.

Optionally, the coating or printing ink compositions used in the present invention can be stabilized by a formulation stabilizer if desired by the addition of inorganic or organic acids to the coating or printing ink composition.

Preferred organic acids are carboxylic acids with a boiling point in the range of from 50 to 270°C. Examples of such organic acids are carboxylic acids, such as formic acid, acetic acid, propionic acid, n- or iso-butanoic acid, benzoic acid, trifluoroacetic acid. Sulfonic acids, such as methanesulfonic acid, benzenesulfonic acid, toluenesulfonic acid can also be used.

Preferred inorganic acids are nitric acid, sulfuric acid, perchloric acid.

These acids can be present in the above compositions in a molar ratio to silver compound of from 0.01 to 1000, preferably from 0.01 to 100.

The security element of the present invention can be used for the prevention of counterfeit or reproduction, on a document of value, right, identity, a security label or a branded good.

Definitions and preferences given above apply equally for all aspects of the invention.

Various aspects and features of the present invention will be further discussed in terms of the examples. The following examples are intended to illustrate various aspects and features of the present invention.

### Examples

### Example 1: Preparation of coating solution, containing terminal alkyne and Ag ions

1.67 g of silver (I) acetate is dispersed in 3.34 g of 1-methoxy-2-propanol with stirring and cooled to 0°C. 1.67 g of propoxylated propargyl alcohol, prepared according to Example 2 of EP 0 239 770 B1, is added in one portion and the mixture is stirred for 30 min at room temperature upon which time the silver acetate completely dissolves. The reaction mixture is filtered through 1.5 µm filter and stored at +5°C for further experiments.

### Example 2a: Preparation of a highly reflective one layer coating

1 g of the solution, obtained in the Example 1, is diluted with 4 g of 1-methoxy-2-propanol and this solution is coated onto PET foil, using the wire bar 0 (4 µm wet thickness). The coating is dried at room temperature and then heated to 130°C for 30 seconds to obtain a highly reflective surface coating.

### Example 2b: Preparation of highly reflective multi-layer coating

1 g of the solution, obtained in the Example 1, is diluted with 4 g of 1-methoxy-2-propanol and this solution (solution 1) is coated onto PET foil, using the wire bar 0 (4 µm wet film thickness). The coating is dried at room temperature and then heated to 130°C for 30 seconds. The obtained dry coating is overcoated with solution 1, using a wire bar 0 (4 µm wet film thickness) and then heated to 130°C for 30 seconds to build a multi-layer coating providing a high reflectivity.

### Example 3: Optical data of the reflective coatings from examples 2a and 2b

**Table 1: Reflexion maximum of the coated films measured over white by means of a spectrophotometer MCS 501 UV-NIR incl. MCS 511 NIR 1.7 (Zeiss)**

| | Reflexion maximum | Wavelength |
|---|---|---|
| Sample from example 2a | 41.7% | 584nm |
| Sample from example 2b | 44.0% | 705nm |

**Table 2: Coloristical data of the coated films measured over white by means of a spectrophotometer MCS 501 UV-NIR incl. MCS 511 NIR 1.7 and a software Aspect Plus (Zeiss)**

| | L* | a* | b* |
|---|---|---|---|
| Sample from example 2a | 69.34 | -3.85 | 11.3 |
| Sample from example 2b | 53.58 | 16.45 | 16.66 |

### Example 4: Conductivity of the reflective coatings

The sheet resistance of the coating, formed in Example 2a, is measured by four-point probe method to give a value of 1.5*10¹⁰ Ω/sq.

### Example 5: Preparation of coating solution, containing terminal alkyne (3-methyl-1-pentyne-3-ol), Ag ions and additional reducing agent (2',3',4'-trihydroxyacetophenone).

110 mg (0.5 mmol) of silver trifluoroacetate is dissolved in 1.5 g of dry ethanol and 49 mg (0.5 mmol) 3-methyl-1-pentyne-3-ol are added with stirring, followed by addition of 42 mg (0.25 mmol) of 2',3',4'-trihydroxyacetophenone. Finally, 0.34 g of 1-methoxy-2-propanol are added with stirring and the obtained clear solution is used to produce metallic nano-particle layers.

### Example 6: Preparation of coating solution, containing terminal alkyne (3-methyl-1-pentyne-3-ol), Ag ions, additional reducing agent (2',3',4'-trihydroxyacetophenone) and a binder (hydroxypropyl cellulose).

220 mg (1 mmol) of silver trifluoroacetate are dissolved in 3 g of dry ethanol and 98 mg (1 mmol) 3-methyl-1-pentyne-3-ol was added with stirring, followed by addition of 84 mg (0.5 mmol) of 2,3,4-trihydroxyacetophenone. 0.68 g of 1-methoxy-2-propanol are added, followed by 10.8 mg of hydroxypropyl cellulose (Mw=ca. 1000000). The mixture is stirred at room temperature until dissolution of hydroxypropyl cellulose and the obtained clear solution is used to produce metallic nano-particle layers.

### Example 7: Preparation of coating solution, containing terminal alkyne (3-methyl-1-pentyne-3-ol), Ag ions, additional reducing agent (2',3',4'-trihydroxyacetophenone), a binder (hydroxypropyl cellulose) and an acid (trifluoroacetic acid).

220 mg (1 mmol) of silver trifluoroacetate are dissolved in 3 g of dry ethanol and 98 mg (1 mmol) 3-methyl-1-pentyne-3-ol are added with stirring, followed by addition of 84 mg (0.5 mmol) of 2,3,4-trihydroxyacetophenone. 0.68 g of 1-methoxy-2-propanol are added, followed by 10.8 mg of hydroxypropyl cellulose (Mw ca. 1,000,000 g/mol). The mixture is stirred at room temperature until dissolution of hydroxypropyl cellulose, then 100 mg of trifluoroacetic acid are added and the obtained clear solution is used to produce metallic nano-particle layers.

### Example 8: Preparation of coating solution, containing terminal alkyne (1-decyne), Ag ions and additional reducing agent (2',3',4'-trihydroxyacetophenone).

110 mg (0.5 mmol) of silver trifluoroacetate are dissolved in 3 g of 2-methyltetrahydrofurane and 69 mg (0.5 mmol) of 1-decyne are added with stirring, followed by addition of 42 mg (0.25 mmol) of 2',3',4'-trihydroxyacetophenone and the obtained clear solution is used to produce metallic nano-particle layers.

### Example 9: Preparation of highly reflective one layer coatings from Examples 5, 6, 7 and 8.

Solutions, obtained in Examples 5, 6, 7 and 8, are coated onto PET foil (Melinex 506), using the wire bar 1 (6 µm wet thickness). The coatings are dried at room temperature and then parts of it are heated to 110°C for 30 seconds and other parts are exposed to UV light (Aktiprint 18/9 device, Hg lamp, 200 W/cm²) to obtain highly reflective surface coatings.

### Example 10: Optical data of the reflective coatings from examples 5 to 8

**Table 3. Optical data of the reflective coatings from example 5 to 8, measured over white background. Gloss at 20° is measured with glossmeter Zehnter 1120. Color charachteristics are measured with X-Rite ® SP68 Sphere Spectrophotometer.**

| | | Example 5 | Example 6 | Example 7 | Example 8 |
|---|---|---|---|---|---|
| Heating 110°C | Gloss 20° | 650 | 630 | 560 | 390 |
| | L* | 69.9 | 75.2 | 72.6 | 69.5 |
| | C* | 24.3 | 25.6 | 29.7 | 16.8 |
| | h | 72.7 | 68.5 | 65.8 | 70 |
| UV lamp Curing | Gloss 20° | 630 | 660 | 634 | 450 |
| | L* | 70.2 | 69 | 66.1 | 76.3 |
| | C* | 44.3 | 41.7 | 37.6 | 31.8 |
| | h | 61.9 | 59 | 54.9 | 64 |

**Table 4. Optical data of the reflective coatings from example 5 to 8, measured over black background. Gloss at 20° was measured with glossmeter Zehnter 1120. Color charachteristics were measured with X-Rite ® SP68 Sphere Spectrophotometer.**

| | | Example 5 | Example 6 | Example 7 | Example 8 |
|---|---|---|---|---|---|
| Heating 110°C | Gloss 20° | 540 | 656 | 600 | 408 |
| | L* | 61.5 | 68 | 63.3 | 54 |
| | C* | 12.1 | 13.3 | 12.1 | 15.1 |
| | h | 97.4 | 105.1 | 96 | 69.8 |
| UV lamp Curing | Gloss 20° | 655 | 535 | 586 | 370 |
| | L* | 65.8 | 61.3 | 63.6 | 59.6 |
| | C* | 15.4 | 12.4 | 12.5 | 14.9 |
| | h | 97.9 | 107.2 | 118.2 | 100.7 |

Fig. 1 and 2 show TEM-images of cross-sections of coated PET substrate from example 2a. In particular, the upper (i.e. darker) layer comprises most of the silver nanoparticles, and the second and lower layer, being in direct contact with the substrate, a PET foil, comprises further clearly smaller silver nanoparticles (in this case the dimensions are up to 12 nm). The total thickness of these two layers is 61-67 nm.

## Claims

1. A method for forming an electrically non-conductive silver nanoparticles-containing layer on a substrate in a coating or printing process comprising the steps
A) coating or printing an ink composition on a substrate comprising
a) a silver compound or a mixture of silver compounds,
b) a compound selected from the group consisting of a compound of formula (I) 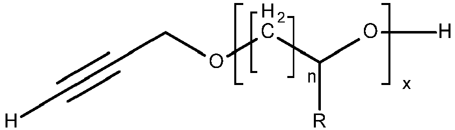 wherein n=1, 2 or 3,
if n=3, R=H
if n=1 or 2, R is substituted or unsubstituted C₁-C₁₈alkyl, or C₆-C₁₀aryl; and x=1 to 20;
a compound of formula (II) 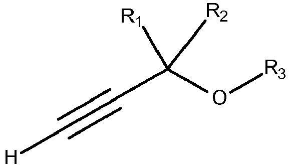
wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
a compound of formula (IIa) 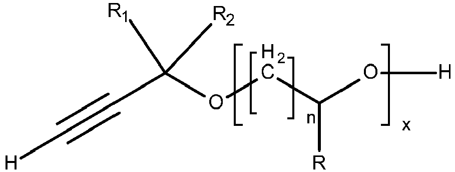 wherein R₁ and R₂ do not simultaneously stand for hydrogen, and n stands for 1,
in formula (II) and (IIa) R₁ and R₂ may be connected in a form of a saturated or unsaturated ring, optionally containing heteroatoms;
a compound of formula (III) 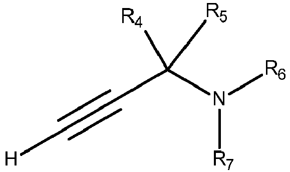
wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain,
R₄ and R₅ may be connected in a form of a saturated or unsaturated ring, optionally containing heteroatoms;
a compound of formula (IV) 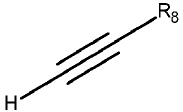 R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
c) optionally a solvent and/or an organic binder and/or reducing agent and/or formulation stabilizer and
B) heating the coated or printed substrate to a temperature of from 30° C to 200° C or applying electromagnetic radiation, preferably ultraviolet (UV) light or an electron beam.

2. A method according to claim 1, wherein the substrate is a plain substrate.

3. A method according to claim 1, wherein the substrate is a structured substrate.

4. A method for forming an optically variable image on a substrate comprising the steps of:
A) forming an optically variable image (OVI) on a discrete portion of the substrate; comprising
a1) applying a curable composition to at least a portion of the substrate;
a2) contacting at least a portion of the curable composition with OVI forming means; and
a3) curing the curable composition treated in step a2) by OVI forming means,
B) coating or printing an ink composition on at least a part of the cured OVI obtained in step a3) comprising
a) a silver compound or a mixture of silver compounds,
b) a compound selected from the groups consisting of a compound of formula (I) 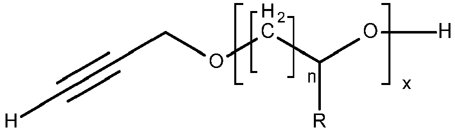 wherein n=1, 2 or 3, preferably 1 or 3,
if n=3, R=H
if n=1 or 2, R is substituted or unsubstituted C₁-C₁₈alkyl, or C₆-C₁₀aryl; and x=1 to 20, preferably 1 to 5;
a compound of formula (II) 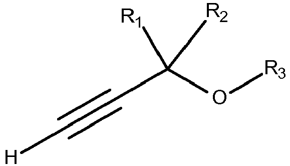
wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
a compound of formula (IIa) 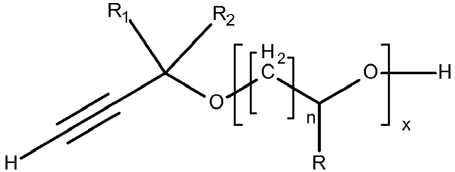
wherein R₁ and R₂ do not simultaneously stand for hydrogen, and n stands for 1,
in formula (II) and (IIa) R₁ and R₂ may be connected in a form of a saturated or unsaturated ring, optionally containing heteroatoms;
a compound of formula (III) 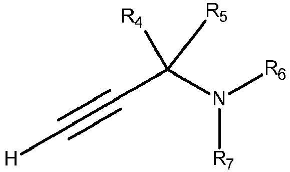
wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain (e.g. PEG, PPG, number of monomer units 1-20),
R₄ and R₅ may be connected in a form of a saturated or unsaturated ring, optionally containing heteroatoms;
a compound of formula (IV) 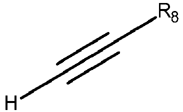 R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
c) optionally a solvent and/or an organic binder and/or reducing agent and/or formulation stabilizer; and
C) heating the coated or printed substrate to a temperature of from 30° C to 200° C or applying electromagnetic radiation, preferably ultraviolet (UV) light or an electron beam.

5. Security, or decorative element, comprising a substrate, which may contain indicia or other visible features in or on its surface, and on at least part of the said substrate surface, an electrically non-conductive silver layer which has been prepared in a coating or printing process comprising the steps
A) coating or printing an ink composition on a substrate comprising
a) a silver compound or a mixture of silver compounds,
b) a compound selected from the groups consisting of a compound of formula (I) 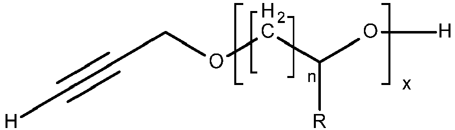
wherein n=1, 2 or 3, preferably 1 or 3,
if n=3, R=H
if n=1 or 2, R is substituted or unsubstituted C₁-C₁₈alkyl, or C₆-C₁₀aryl; and x=1 to 20, preferably 1 to 5;
a compound of formula (II) 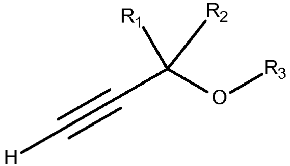
wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
a compound of formula (IIa) 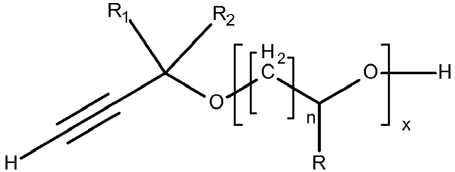
wherein R₁ and R₂ do not simultaneously stand for hydrogen, and n stands for 1,
in formula (II) and (IIa) R₁ and R₂ may be connected in a form of a saturated or unsaturated ring, optionally containing heteroatoms;
a compound of formula (III) 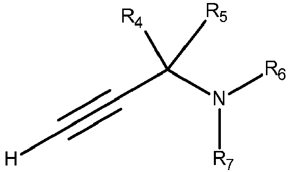
wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain (e.g. PEG, PPG, number of monomer units 1-20),
R₄ and R₅ may be connected in a form of a saturated or unsaturated ring, optionally containing heteroatoms;
a compound of formula (IV) 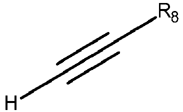 R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
c) optionally a solvent and/or an organic binder and/or reducing agent and/or formultion stabilizer; and
B) heating the coated or printed substrate to a temperature of from 30° C to 200° C or applying electromagnetic radiation, preferably ultraviolet (UV) light or an electron beam.

6. Use of the element according to claim 5, for the prevention of counterfeit or reproduction, on a document of value, right, identity, a security label or a branded good.

7. A method according to any of claims 1 to 4, wherein the binder comprises nitrocellulose, ethyl cellulose, cellulose acetate, cellulose acetate propionate (CAP), cellulose acetate butyrate (CAB), hydroxyethyl cellulose, hydroxypropyl cellulose, alcohol soluble propionate (ASP), vinyl chloride, vinyl acetate copolymers, vinyl acetate, vinyl, acrylic, polyurethane, polyamide, rosin ester, hydrocarbon, aldehyde, ketone, urethane, polyethyleneterephthalate, terpene phenol, polyolefin, silicone, cellulose, polyamide, polyester, rosin ester resins, shellac and mixtures thereof.

8. A method according to claims 1 to 4, and 7, wherein the printing process is done by offset or by gravure printing.

9. A method according to claims 1 to 4, 7 and 8, wherein a protective top coat is applied.

10. A method according to claim 1 to 3, wherein step A) and B) or according to claim 4 wherein step B) and C) are repeated 1 to 5 times resulting in a multilayer metallic structure.

11. A security product obtainable by using the method as claimed in claim 1 to 4, and 7 to 10.

12. The product according to claim 11, which includes banknotes, credit cards, identification documents like passports, identification cards, drivers licenses, or other verification documents, pharmaceutical apparel, software, compact discs, tobacco packaging and other products or packaging prone to counterfeiting or forgery.

13. A method according to claims 1 to 4, 7 to 10, wherein the reducing agent is chosen from polyphenols and their derivatives; formic acids and it's salts; oxalic acid and it's salts; aldehydes, such as butyraldehyde, glyoxal, glutaric dialdehyde, glyoxylic acid; acetals and hemi-acetals such as glyoxal trimer dihydrate (hexahydro[1,4]dioxino[2,3-b][1,4]dioxine-2,3,6,7-tetrol); ascorbic acid; hydroxylamine and it's derivatives; hydrazine and its derivatives; alkyl and aryl phosphines; tin hydrides or silanes.

14. A method according to claims 1 to 3, 7 to 10 and 13, wherein step B) is carried out by exposure to UV light, and according to claim 3, wherein step C) is carried out by exposure to UV light.

15. A security product obtainable by using the method as claimed in claim 1 to 4, and 7 to 10, 13 and 14, wherein the silver layer comprises an upper and a lower part.

16. A coating or printing ink composition comprising
a) a silver compound or a mixture of silver compounds,
b) a compound selected from the groups consisting of a compound of formula (I) 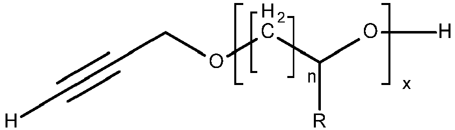 wherein n=1, 2 or 3, preferably 1 or 3,
if n=3, R=H
if n=1 or 2, R is substituted or unsubstituted C₁-C₁₈alkyl, or C₆-C₁₀aryl; and x=1 to 20, preferably 1 to 5;
a compound of formula (II) 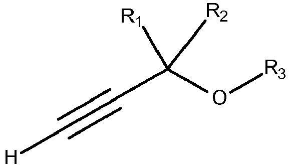
wherein R₁, R₂ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₃ is independently from R₁ and R₂ hydrogen, substituted or unsubstituted C₁-C₁₈ alkyl, substituted or unsubstituted C₅-C₁₂ cycloalkyl, substituted or unsubstituted C₆-C₁₀ aryl, acyl;
a compound of formula (IIa) 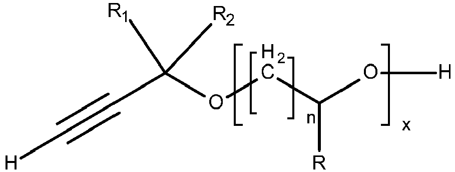
wherein R₁ and R₂ do not simultaneously stand for hydrogen, and n stands for 1,
in formula (II) and (IIa) R₁ and R₂ may be connected in a form of a saturated or unsaturated ring, optionally containing heteroatoms;
a compound of formula (III) 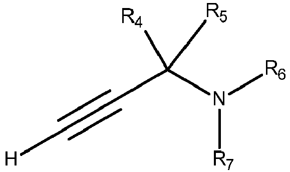
wherein R₄, R₅ are independently hydrogen, substituted or unsubstituted C₁-C₁₈ alkyl, substituted or unsubstituted C₅-C₁₂ cycloalkyl, substituted or unsubstituted C₆-C₁₀ aryl,
R₆, R₇ are, independently from each other and R₄ and R₅, hydrogen, substituted or unsubstituted C₁-C₁₈ alkyl, substituted or unsubstituted C₅-C₁₂ cycloalkyl, substituted or unsubstituted C₆-C₁₀ aryl, acyl, an oligo(alkylene glycol) chain (e.g. PEG, PPG, number of monomer units 1-20),
R₄ and R₅ may be connected in a form of a saturated or unsaturated ring, optionally containing heteroatoms;
a compound of formula (IV) 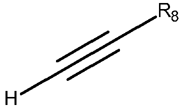 R₈ is substituted or unsubstituted C₁-C₁₈ alkyl, substituted or unsubstituted C₅-C₁₂ cycloalkyl, substituted or unsubstituted C₆-C₁₀ aryl, wherein the alkyl, cycloalkyl and aryl groups may contain oxygen, nitrogen or sulfur atoms as heteroatoms,
c) optionally a solvent and/or an organic binder and/or reducing agent and/or formulation stabilizer.

## Patentansprüche

1. Verfahren zur Bildung einer elektrisch nichtleitenden silbernanopartikelhaltigen Schicht auf einem Substrat in einem Beschichtungs- oder Druckprozess, der folgende Schritte umfasst:
A) Beschichten oder Bedrucken eines Substrats mit einer Farbenzusammensetzung, umfassend
a) eine Silberverbindung oder eine Mischung von Silberverbindungen,
b) eine Verbindung aus der Gruppe bestehend aus einer Verbindung der Formel (I) 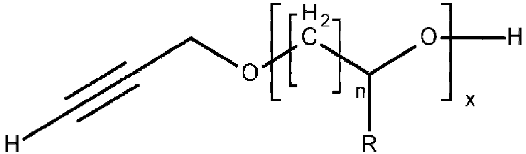 wobei n = 1, 2 oder 3,
dann, wenn n = 3, R = H,
dann, wenn n = 1 oder 2, R für substituiertes oder unsubstituiertes C₁-C₁₈-Alkyl oder C₆-C₁₀-Aryl steht;
und x = 1 bis 20;
einer Verbindung der Formel (II) 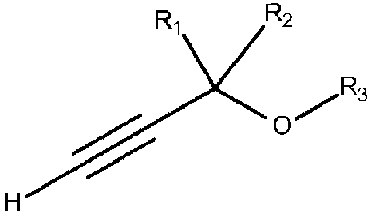
wobei R₁, R₂ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen,
R₃ unabhängig von R₁ und R₂ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl steht;
einer Verbindung der Formel (IIa) 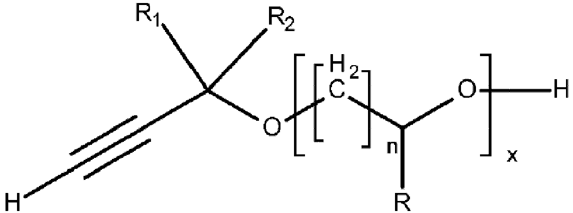
wobei R₁ und R₂ nicht gleichzeitig für Wasserstoff stehen und n für 1 steht,
in Formel (II) und (IIa) R₁ und R₂ in Form eines gesättigten oder ungesättigten Rings, der gegebenenfalls Heteroatome enthält, verbunden sein können;
einer Verbindung der Formel (III) 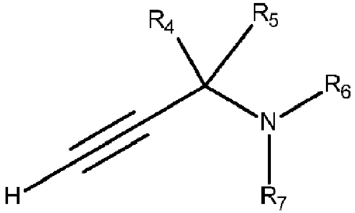 wobei
R₄, R₅ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen, R₆, R₇ unabhängig voneinander und von R₄ und R₅ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl, eine Oligo(alkylenglykol)-Kette stehen,
R₄ und R₅ in Form eines gesättigten oder ungesättigten Rings, der gegebenenfalls Heteroatome enthält, verbunden sein können;
einer Verbindung der Formel (IV) 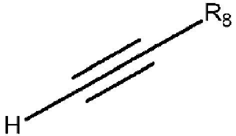 wobei R₈ für substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl steht, wobei die Alkyl-, Cycloalkyl- und Arylgruppen Sauerstoff-, Stickstoff- oder Schwefelatom als Heteroatome enthalten können,
c) gegebenenfalls ein Lösungsmittel und/oder ein organisches Bindemittel und/oder ein Reduktionsmittel und/oder einen Formulierungsstabilisator,
B) Erhitzen des beschichteten oder bedruckten Substrats auf eine Temperatur von 30 °C bis 200 °C oder Aufbringen von elektromagnetischer Strahlung, vorzugsweise Ultraviolett(UV)-Licht oder eines Elektronenstrahls.

2. Verfahren nach Anspruch 1, wobei es sich bei dem Substrat um ein glattes Substrat handelt.

3. Verfahren nach Anspruch 1, wobei es sich bei dem Substrat um ein strukturiertes Substrat handelt.

4. Verfahren zum Bilden eines optisch variablen Bilds auf einem Substrat, das folgende Schritte umfasst:
A) Bilden eines optisch variablen Bilds (OVI) auf einem diskreten Teil des Substrats; umfassend:
a1) Aufbringen einer härtbaren Verbindung auf mindestens einen Teil des Substrats;
a2) Inberührungbringen mindestens eines Teils der härtbaren Verbindung mit Mitteln zum Bilden eines OVI; und
a3) Härten der in Schritt a2) mit Mitteln zum Bilden eines OVI behandelten härtbaren Verbindung,
B) Beschichten oder Bedrucken mindestens eines Teils des in Schritt a3) erhaltenen gehärteten OVI mit einer Farbenzusammensetzung, umfassend
a) eine Silberverbindung oder eine Mischung von Silberverbindungen,
b) eine Verbindung aus der Gruppe bestehend aus einer Verbindung der Formel (I) 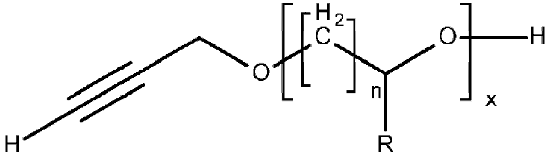
wobei n = 1, 2 oder 3, vorzugsweise 1 oder 3, dann, wenn n = 3, R = H,
dann, wenn n = 1 oder 2, R für substituiertes oder unsubstituiertes C₁-C₁₈-Alkyl oder C₆-C₁₀-Aryl steht;
und x = 1 bis 20, vorzugsweise 1 bis 5;
einer Verbindung der Formel (II) 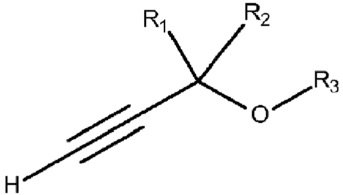
wobei R₁, R₂ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen,
R₃ unabhängig von R₁ und R₂ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl steht;
einer Verbindung der Formel (IIa) 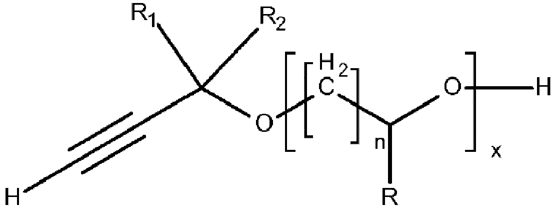
wobei R₁ und R₂ nicht gleichzeitig für Wasserstoff stehen und n für 1 steht,
in Formel (II) und (IIa) R₁ und R₂ in Form eines gesättigten oder ungesättigten Rings, der gegebenenfalls Heteroatome enthält, verbunden sein können;
einer Verbindung der Formel (III) 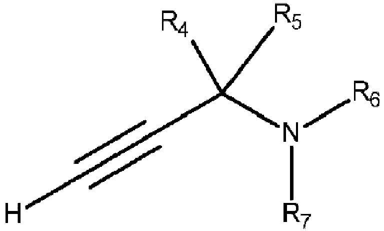 wobei
R₄, R₅ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen, R₆, R₇ unabhängig voneinander und von R₄ und R₅ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl, eine Oligo(alkylenglykol)-Kette (z. B. PEG, PPG, Zahl von Monomereinheiten 1-20) stehen,
R₄ und R₅ in Form eines gesättigten oder ungesättigten Rings, der gegebenenfalls Heteroatome enthält, verbunden sein können;
einer Verbindung der Formel (IV) 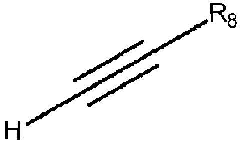 wobei R₈ für substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl steht, wobei die Alkyl-, Cycloalkyl- und Arylgruppen Sauerstoff-, Stickstoff- oder Schwefelatom als Heteroatome enthalten können,
c) gegebenenfalls ein Lösungsmittel und/oder ein organisches Bindemittel und/oder ein Reduktionsmittel und/oder einen Formulierungsstabilisator; und
C) Erhitzen des beschichteten oder bedruckten Substrats auf eine Temperatur von 30 °C bis 200 °C oder Aufbringen von elektromagnetischer Strahlung, vorzugsweise Ultraviolett(UV)-Licht oder eines Elektronenstrahls.

5. Sicherheits- oder Dekorelement, umfassend ein Substrat, das Angaben oder andere sichtbare Merkmale in oder auf seiner Oberfläche enthalten kann, und auf mindestens einem Teil des Substrats eine elektrisch nichtleitende Silberschicht, die in einem Beschichtungs- oder Druckprozess hergestellt wurde, der folgende Schritte umfasst:
A) Beschichten oder Bedrucken eines Substrats mit einer Farbenzusammensetzung, umfassend
a) eine Silberverbindung oder eine Mischung von Silberverbindungen,
b) eine Verbindung aus der Gruppe bestehend aus einer Verbindung der Formel (I) 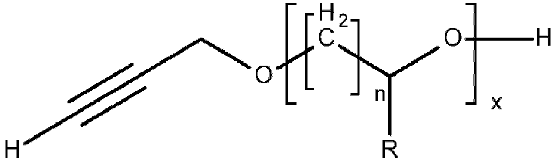
wobei n = 1, 2 oder 3, vorzugsweise 1 oder 3, dann, wenn n = 3, R = H,
dann, wenn n = 1 oder 2, R für substituiertes oder unsubstituiertes C₁-C₁₈-Alkyl oder C₆-C₁₀-Aryl steht;
und x = 1 bis 20, vorzugsweise 1 bis 5;
einer Verbindung der Formel (II) 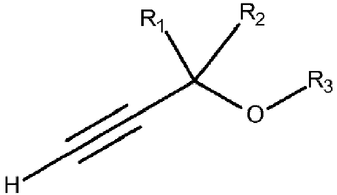
wobei R₁, R₂ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen,
R₃ unabhängig von R₁ und R₂ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl steht;
einer Verbindung der Formel (IIa) 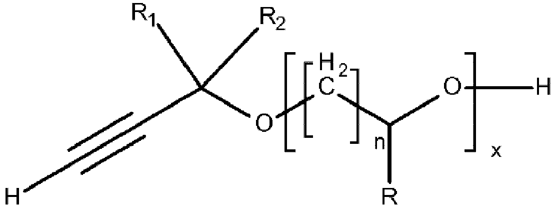
wobei R₁ und R₂ nicht gleichzeitig für Wasserstoff stehen und n für 1 steht,
in Formel (II) und (IIa) R₁ und R₂ in Form eines gesättigten oder ungesättigten Rings, der gegebenenfalls Heteroatome enthält, verbunden sein können;
einer Verbindung der Formel (III) 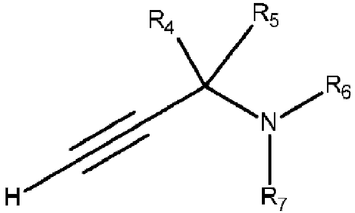 wobei
R₄, R₅ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen, R₆, R₇ unabhängig voneinander und von R₄ und R₅ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl, eine Oligo(alkylenglykol)-Kette (z. B. PEG, PPG, Zahl von Monomereinheiten 1-20) stehen,
R₄ und R₅ in Form eines gesättigten oder ungesättigten Rings, der gegebenenfalls Heteroatome enthält, verbunden sein können;
einer Verbindung der Formel (IV) 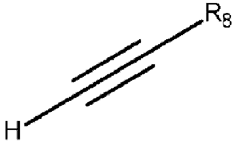
wobei R₈ für substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl steht, wobei die Alkyl-, Cycloalkyl- und Arylgruppen Sauerstoff-, Stickstoff- oder Schwefelatom als Heteroatome enthalten können,
c) gegebenenfalls ein Lösungsmittel und/oder ein organisches Bindemittel und/oder ein Reduktionsmittel und/oder einen Formulierungsstabilisator; und
B) Erhitzen des beschichteten oder bedruckten Substrats auf eine Temperatur von 30 °C bis 200 °C oder Aufbringen von elektromagnetischer Strahlung, vorzugsweise Ultraviolett(UV)-Licht oder eines Elektronenstrahls.

6. Verwendung des Elements nach Anspruch 5 zur Prävention der Fälschung oder Reproduktion eines Wert-, Rechts- oder Identitätsdokuments, eines Sicherheitsetiketts oder eines Markenartikels.

7. Verfahren nach einem der Ansprüche 1 bis 4, wobei das Bindemittel Nitrocellulose, Ethylcellulose, Celluloseacetat, Celluloseacetatpropionat (CAP), Celluloseacetatbutyrat (CAB), Hydroxyethylcellulose, Hydroxypropylcellulose, alkohollösliches Propionat (ASP), Vinylchlorid-, Vinylacetat-Copolymer-, Vinylacetat-, Vinyl-, Acryl-, Polyurethan-, Polyamid-, Kolophoniumester-, Kohlenwasserstoff-, Aldehyd-, Keton-, Urethan-, Polyethylenterephthalat-, Terpenphenol-, Polyolefin-, Silikon-, Cellulose-, Polyamid-, Polyester- und Kolophoniumesterharze, Schellack und Mischungen davon umfasst.

8. Verfahren nach den Ansprüchen 1 bis 4 und 7, wobei der Druckprozess durch Offset- oder Tiefdruck erfolgt.

9. Verfahren nach den Ansprüchen 1 bis 4, 7 und 8, wobei eine schützende Deckschicht aufgebracht wird.

10. Verfahren nach Anspruch 1 bis 3, wobei Schritt A) und B) oder nach Anspruch 4, wobei Schritt B) und C) 1- bis 5-mal wiederholt werden, was eine mehrschichtige metallische Struktur ergibt.

11. Sicherheitsprodukt, das durch Verwendung des Verfahrens nach Anspruch 1 bis 4 und 7 bis 10 erhältlich ist.

12. Produkt nach Anspruch 11, das Banknoten, Kreditkarten, Identifikationsdokumente wie Reisepässe, Personalausweise, Führerscheine oder andere Verifikationsdokumente, pharmazeutische Kleidung, Software, Compact Discs, Tabakverpackungen und andere Produkte oder Verpackungen, die fälschungs- oder verfälschungsgefährdet sind, einschließt.

13. Verfahren nach den Ansprüchen 1 bis 4, 7 bis 10, wobei das Reduktionsmittel aus Polyphenolen und ihren Derivaten; Ameisensäure und ihren Salzen; Oxalsäure und ihren Salzen; Aldehyden, wie Butyraldehyd, Glyoxal, Glutardialdehyd, Glyoxylsäure; Acetalen und Hemiacetalen wie Glyoxaltrimerhydrat (Hexahydro[1,4]dioxino[2,3-b][1,4]-dioxin-2,3,6,7-tetrol); Ascorbinsäure; Hydroxylamin und seinen Derivaten; Hydrazin und seinen Derivaten; Alkyl- und Arylphosphinen; Zinnhydriden oder Silanen ausgewählt wird.

14. Verfahren nach den Ansprüchen 1 bis 3, 7 bis 10 und 13, wobei Schritt B) durch Belichtung mit UV-Licht durchgeführt wird, und nach Anspruch 3, wobei Schritt C) durch Belichtung mit UV-Licht durchgeführt wird.

15. Sicherheitsprodukt, das durch Verwendung des Verfahrens nach Anspruch 1 bis 4 und 7 bis 10, 13 und 14 erhältlich ist, wobei die Silberschicht einen oberen und einen unteren Teil umfasst.

16. Beschichtungs- oder Druckfarbenzusammensetzung, umfassend
a) eine Silberverbindung oder eine Mischung von Silberverbindungen,
b) eine Verbindung aus der Gruppe bestehend aus einer Verbindung der Formel (I) 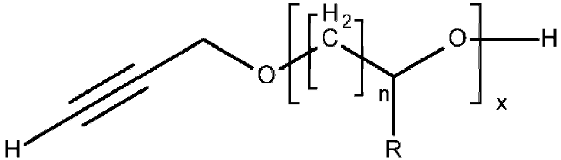
wobei n = 1, 2 oder 3, vorzugsweise 1 oder 3, dann, wenn n = 3, R = H,
dann, wenn n = 1 oder 2, R für substituiertes oder unsubstituiertes C₁-C₁₈-Alkyl oder C₆-C₁₀-Aryl steht;
und x = 1 bis 20, vorzugsweise 1 bis 5;
einer Verbindung der Formel (II) 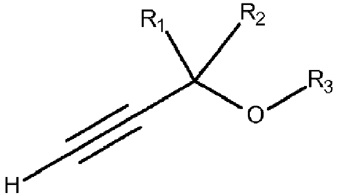
wobei R₁, R₂ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen,
R₃ unabhängig von R₁ und R₂ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl steht;
einer Verbindung der Formel (IIa) 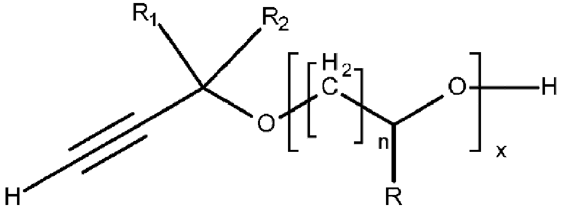
wobei R₁ und R₂ nicht gleichzeitig für Wasserstoff stehen und n für 1 steht,
in Formel (II) und (IIa) R₁ und R₂ in Form eines gesättigten oder ungesättigten Rings, der gegebenenfalls Heteroatome enthält, verbunden sein können;
einer Verbindung der Formel (III) 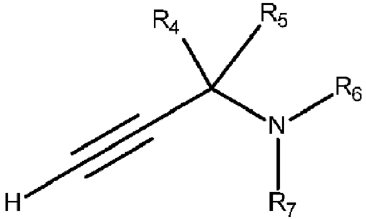 wobei
R₄, R₅ unabhängig für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl stehen, R₆, R₇ unabhängig voneinander und von R₄ und R₅ für Wasserstoff, substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl, Acyl, eine Oligo(alkylenglykol)-Kette (z. B. PEG, PPG, Zahl von Monomereinheiten 1-20) stehen,
R₄ und R₅ in Form eines gesättigten oder ungesättigten Rings, der gegebenenfalls Heteroatome enthält, verbunden sein können;
einer Verbindung der Formel (IV) 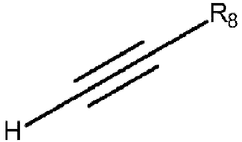 wobei R₈ für substituiertes oder unsubstituiertes C₁-C₁₈-Alkyl, substituiertes oder unsubstituiertes C₅-C₁₂-Cycloalkyl, substituiertes oder unsubstituiertes C₆-C₁₀-Aryl steht, wobei die Alkyl-, Cycloalkyl- und Arylgruppen Sauerstoff-, Stickstoff- oder Schwefelatome als Heteroatome enthalten können,
c) gegebenenfalls ein Lösungsmittel und/oder ein organisches Bindemittel und/oder ein Reduktionsmittel und/oder einen Formulierungsstabilisator.

## Revendications

1. Procédé pour la formation d'une couche contenant des nanoparticules d'argent électriquement non conductrice sur un substrat dans un processus de revêtement ou d'impression, comprenant les étapes
A) application en revêtement ou impression sur un substrat d'une composition d'encre comprenant
a) un composé de l'argent ou un mélange de composés de l'argent,
b) un composé choisi dans le groupe constitué par un composé de formule (I) 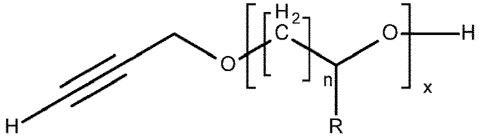
dans lequel n = 1, 2 ou 3,
si n = 3, R = H
si n = 1 ou 2, R est un groupe alkyle en C₁-C₁₈ substitué ou non substitué ou aryle en C₆-C₁₀ ; et x = 1 à 20 ;
un composé de formule (II) 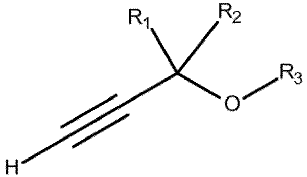
dans lequel R₁, R₂ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué,
R₃ est indépendamment de R₁ et R₂ l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué, acyle ;
un composé de formule (IIa) 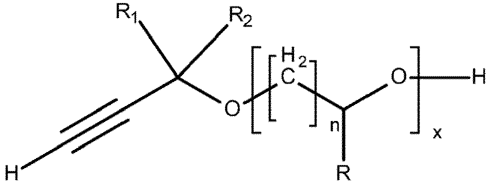
dans lequel R₁ et R₂ ne représentent pas simultanément l'atome d'hydrogène et n représente 1,
dans les formules (II) et (IIa) R₁ et R₂ pouvant être reliés sous une forme d'un cycle saturé ou insaturé, contenant éventuellement des hétéroatomes ;
un composé de formule (III) 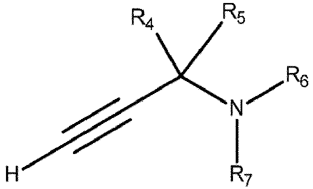
dans lequel R₄, R₅ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué, R₆, R₇ sont, chacun indépendamment de l'autre et de R₄ et R₅, l'atome d'hydrogène, un groupe alkyle en C₁-C₁₈ substitué ou non substitué, cycloalkyle en C₅-C₁₂ substitué ou non substitué, aryle en C₆-C₁₀ substitué ou non substitué, acyle, une chaîne oligo(alkylèneglycol),
R₄ et R₅ peuvent être reliés sous une forme d'un cycle saturé ou insaturé, contenant éventuellement des hétéroatomes ;
un composé de formule (IV) 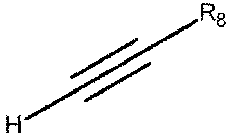 dans lequel R₈ est un groupe alkyle en C₁-C₁₈ substitué ou non substitué, cycloalkyle en C₅-C₁₂ substitué ou non substitué, aryle en C₆-C₁₀ substitué ou non substitué, les groupes alkyle, cycloalkyle et aryle pouvant contenir des atomes d'oxygène, d'azote ou de soufre en tant qu'hétéroatomes,
c) éventuellement un solvant et/ou un liant organique et/ou un agent réducteur et/ou un stabilisant de formulation et
B) chauffage du substrat revêtu ou imprimé à une température 30 °C à 200 °C ou application d'un rayonnement électromagnétique, de préférence de lumière ultraviolette (UV) ou d'un faisceau d'électrons.

2. Procédé selon la revendication 1, dans lequel le substrat est un substrat lisse.

3. Procédé selon la revendication 1, dans lequel le substrat est un substrat structuré.

4. Procédé pour la formation d'une image optiquement variable sur un substrat comprenant les étapes de :
A) formation d'une image optiquement variable (OVI) sur une partie discrète du substrat ; comprenant
a1) l'application d'une composition durcissable sur au moins une partie du substrat ;
a2) la mise en contact d'au moins une partie de la composition durcissable avec un moyen de formation d'OVI ; et
a3) le durcissement de la composition durcissable traitée dans l'étape a2) par le moyen de formation d'OVI,
B) application en revêtement ou impression sur au moins une partie de l'OVI durcie obtenue dans l'étape a3) d'une composition d'encre comprenant
a) un composé de l'argent ou un mélange de composés de l'argent,
b) un composé choisi dans le groupe constitué par un composé de formule (I) 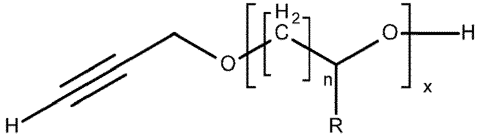
dans lequel n = 1, 2 ou 3, de préférence 1 ou 3,
si n = 3, R = H
si n = 1 ou 2, R est un groupe alkyle en C₁-C₁₈ substitué ou non substitué ou aryle en C₆-C₁₀ ; et x = 1 à 20, de préférence 1 à 5 ;
un composé de formule (II) 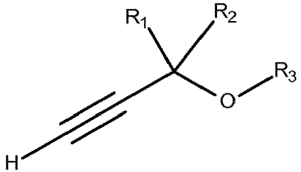
dans lequel R₁, R₂ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué,
R₃ est indépendamment de R₁ et R₂ l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué, acyle ;
un composé de formule (IIa) 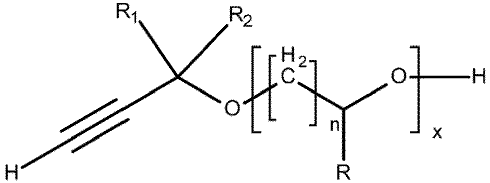
dans lequel R₁ et R₂ ne représentent pas simultanément l'atome d'hydrogène et n représente 1,
dans les formules (II) et (IIa) R₁ et R₂ pouvant être reliés sous une forme d'un cycle saturé ou insaturé, contenant éventuellement des hétéroatomes ;
un composé de formule (III) 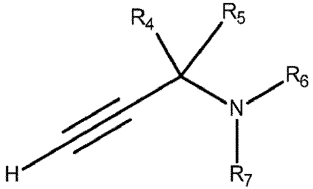
dans lequel R₄, R₅ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué,
R₆, R₇ sont, chacun indépendamment de l'autre et de R₄ et R₅, l'atome d'hydrogène, un groupe alkyle en C₁-C₁₈ substitué ou non substitué, cycloalkyle en C₅-C₁₂ substitué ou non substitué, aryle en C₆-C₁₀ substitué ou non substitué, acyle, une chaîne oligo(alkylèneglycol) (par exemple PEG, PPG, nombre de motifs monomères de 1-20),
R₄ et R₅ peuvent être reliés sous une forme d'un cycle saturé ou insaturé, contenant éventuellement des hétéroatomes ;
un composé de formule (IV) 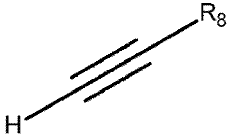 dans lequel R₈ est un groupe alkyle en C₁-C₁₈ substitué ou non substitué, cycloalkyle en C₅-C₁₂ substitué ou non substitué, aryle en C₆-C₁₀ substitué ou non substitué, les groupes alkyle, cycloalkyle et aryle pouvant contenir des atomes d'oxygène, d'azote ou de soufre en tant qu'hétéroatomes,
c) éventuellement un solvant et/ou un liant organique et/ou un agent réducteur et/ou un stabilisant de formulation ; et
C) chauffage du substrat revêtu ou imprimé à une température 30 °C à 200 °C ou application d'un rayonnement électromagnétique, de préférence de lumière ultraviolette (UV) ou d'un faisceau d'électrons.

5. Élément de sécurité ou décoratif, comprenant un substrat, qui peut contenir des marques ou d'autres caractéristiques visibles dans ou sur sa surface, et sur au moins une partie de ladite surface de substrat, une couche d'argent électriquement non conductrice qui a été préparée dans un processus de revêtement ou d'impression comprenant les étapes
A) application en revêtement ou impression sur un substrat d'une composition d'encre comprenant
a) un composé de l'argent ou un mélange de composés de l'argent,
b) un composé choisi dans le groupe constitué par un composé de formule (I) 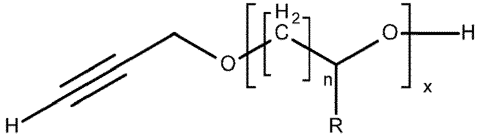
dans lequel n = 1, 2 ou 3, de préférence 1 ou 3,
si n = 3, R = H
si n = 1 ou 2, R est un groupe alkyle en C₁-C₁₈ substitué ou non substitué ou aryle en C₆-C₁₀ ; et x = 1 à 20, de préférence 1 à 5 ;
un composé de formule (II) 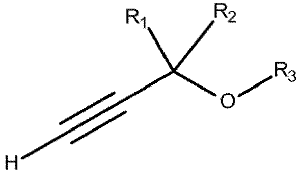
dans lequel R₁, R₂ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué,
R₃ est indépendamment de R₁ et R₂ l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué, acyle ;
un composé de formule (IIa) 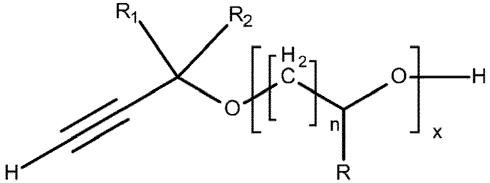
dans lequel R₁ et R₂ ne représentent pas simultanément l'atome d'hydrogène et n représente 1,
dans les formules (II) et (IIa) R₁ et R₂ pouvant être reliés sous une forme d'un cycle saturé ou insaturé, contenant éventuellement des hétéroatomes ;
un composé de formule (III) 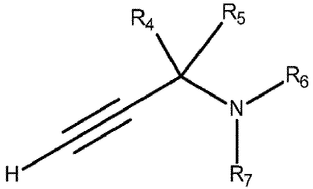
dans lequel R₄, R₅ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué,
R₆, R₇ sont, chacun indépendamment de l'autre et de R₄ et R₅, l'atome d'hydrogène, un groupe alkyle en C₁-C₁₈ substitué ou non substitué, cycloalkyle en C₅-C₁₂ substitué ou non substitué, aryle en C₆-C₁₀ substitué ou non substitué, acyle, une chaîne oligo(alkylèneglycol), (par exemple PEG, PPG, nombre de motifs monomères de 1-20),
R₄ et R₅ peuvent être reliés sous une forme d'un cycle saturé ou insaturé, contenant éventuellement des hétéroatomes ;
un composé de formule (IV) 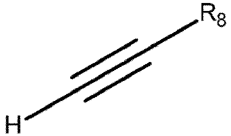 dans lequel R₈ est un groupe alkyle en C₁-C₁₈ substitué ou non substitué, cycloalkyle en C₅-C₁₂ substitué ou non substitué, aryle en C₆-C₁₀ substitué ou non substitué, les groupes alkyle, cycloalkyle et aryle pouvant contenir des atomes d'oxygène, d'azote ou de soufre en tant qu'hétéroatomes,
c) éventuellement un solvant et/ou un liant organique et/ou un agent réducteur et/ou un stabilisant de formulation ; et
B) chauffage du substrat revêtu ou imprimé à une température 30 °C à 200 °C ou application d'un rayonnement électromagnétique, de préférence de lumière ultraviolette (UV) ou d'un faisceau d'électrons.

6. Utilisation de l'élément selon la revendication 5, pour la prévention de la contrefaçon ou de la reproduction, sur un document de valeur, de droit, d'identité, une étiquette de sécurité ou un produit de marque.

7. Procédé selon l'une quelconque des revendications 1 à 4, dans lequel le liant comprend de la nitrocellulose, de l'éthylcellulose, de l'acétate de cellulose, de l'acétate et propionate de cellulose (CAP), de l'acétate et butyrate de cellulose (CAB), de l'hydroxyéthylcellulose, de l'hydroxypropylcellulose, un propionate soluble dans les alcools (ASP), du chlorure de vinyle, des copolymères d'acétate de vinyle, de l'acétate de vinyle, du vinyle, un composé acrylique, du polyuréthane, du polyamide, un ester de colophane, un hydrocarbure, un aldéhyde, une cétone, un uréthane, du poly(téréphtalate d'éthylène), du phénol terpénique, une polyoléfine, de la silicone, de la cellulose, du polyamide, du polyester, des résines d'ester de colophane, de la gomme laque et des mélanges de ceux-ci.

8. Procédé selon les revendications 1 à 4 et 7, dans lequel le processus d'impression est effectué par impression offset ou par héliogravure.

9. Procédé selon les revendications 1 à 4, 7 et 8, dans lequel une couche de finition protectrice est appliquée.

10. Procédé selon les revendications 1 à 3, dans lequel les étapes A) et B) ou selon la revendication 4 dans lequel les étapes B) et C) sont répétées 1 à 5 fois ce qui aboutit à une structure métallique multicouche.

11. Produit de sécurité pouvant être obtenu à l'aide du procédé tel que revendiqué dans les revendications 1 à 4 et 7 à 10.

12. Produit selon la revendication 11, qui comprend des billets de banque, des cartes de crédit, des documents d'identité comme des passeports, des cartes d'identité, des permis de conduire ou d'autres documents de vérification, des vêtements pharmaceutiques, un logiciel, des disques compacts, un emballage de tabac et d'autres produits ou emballage susceptibles d'être contrefaits ou falsifiés.

13. Procédé selon les revendications 1 à 4, 7 à 10, dans lequel l'agent réducteur est choisi parmi les polyphénols et leurs dérivés ; l'acide formique et ses sels ; l'acide oxalique et ses sels ; les aldéhydes, tels que le butyraldéhyde, le glyoxal, le dialdéhyde glutarique, l'acide glyoxylique ; les acétals et hémiacétals tels que le glyoxal trimère dihydraté (l'hexahydro[1,4]dioxine[2,3-*b*][1,4]dioxine-2,3,6,7-tétraol) ; l'acide ascorbique ; l'hydroxylamine et ses dérivés ; l'hydrazine et ses dérivés ; les alkylphosphines et arylphosphines ; les hydrures d'étain ou les silanes.

14. Procédé selon les revendications 1 à 3, 7 à 10 et 13, dans lequel l'étape B) est effectuée par exposition à de la lumière UV et selon la revendication 3, dans lequel l'étape C) est effectuée par exposition à de la lumière UV.

15. Produit de sécurité pouvant être obtenu à l'aide du procédé tel que revendiqué dans les revendications 1 à 4 et 7 à 10, 13 et 14, dans lequel la couche d'argent comprend une partie supérieure et une partie inférieure.

16. Composition d'encre pour revêtement ou impression comprenant
a) un composé de l'argent ou un mélange de composés de l'argent,
b) un composé choisi dans le groupe constitué par un composé de formule (I) 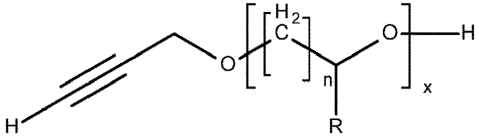
dans lequel n = 1, 2 ou 3, de préférence 1 ou 3,
si n = 3, R = H
si n = 1 ou 2, R est un groupe alkyle en C₁-C₁₈ substitué ou non substitué ou aryle en C₆-C₁₀ ;
et x = 1 à 20, de préférence 1 à 5 ;
un composé de formule (II) 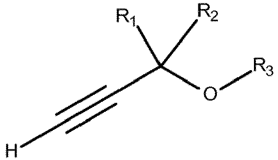
dans lequel R₁, R₂ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué,
R₃ est indépendamment de R₁ et R₂ l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué, acyle ;
un composé de formule (IIa) 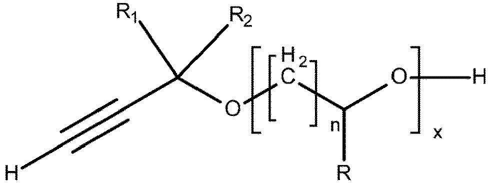
dans lequel R₁ et R₂ ne représentent pas simultanément l'atome d'hydrogène et n représente 1,
dans les formules (II) et (IIa) R₁ et R₂ pouvant être reliés sous une forme d'un cycle saturé ou insaturé, contenant éventuellement des hétéroatomes ;
un composé de formule (III) 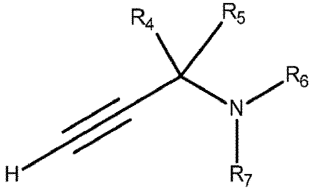
dans lequel R₄, R₅ sont chacun indépendamment l'atome d'hydrogène ou un groupe alkyle en C₁-C₁₈ substitué ou non substitué, cycloalkyle en C₅-C₁₂ substitué ou non substitué, aryle en C₆-C₁₀ substitué ou non substitué,
R₆, R₇ sont, chacun indépendamment de l'autre et de R₄ et R₅, l'atome d'hydrogène, un groupe alkyle en C₁-C₁₈ substitué ou non substitué, cycloalkyle en C₅-C₁₂ substitué ou non substitué, aryle en C₆-C₁₀ substitué ou non substitué, acyle, une chaîne oligo(alkylèneglycol), (par exemple PEG, PPG, nombre de motifs monomères de 1-20),
R₄ et R₅ peuvent être reliés sous une forme d'un cycle saturé ou insaturé, contenant éventuellement des hétéroatomes ;
un composé de formule (IV) 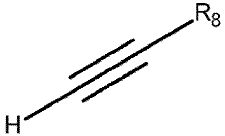 dans lequel R₈ est un groupe alkyle en C₁-C₁₈ substitué ou non substitué, cycloalkyle en C₅-C₁₂ substitué ou non substitué, aryle en C₆-C₁₀ substitué ou non substitué, les groupes alkyle, cycloalkyle et aryle pouvant contenir des atomes d'oxygène, d'azote ou de soufre en tant qu'hétéroatomes,
c) éventuellement un solvant et/ou un liant organique et/ou un agent réducteur et/ou un stabilisant de formulation.
